# EUROPÄISCHE PATENTANMELDUNG

(11) **EP 3 085 720 A1**
(43) Veröffentlichungstag der Anmeldung: **26.10.2016**
(21) Anmeldenummer: 16166433.9
(22) Anmeldetag: 21.04.2016
(51) Int. Cl.: C08G 18/73, C08G 18/79, C08G 18/02, C08G 18/22, C08G 18/28, C08G 18/32, C08G 18/38, C08G 18/09, C08G 18/80

(54) **HYDROPHIL MODIFIZIERTER POLYISOCYANURATKUNSTSTOFF UND VERFAHREN ZU DESSEN HERSTELLUNG**

(30) Priorität: 21.04.2015 EP 15164518; 21.04.2015 EP 15164519; 21.04.2015 EP 15164520; 21.04.2015 EP 15164522
(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft neue modifizierte Polyisocyanuratkunststoffe, erhältlich durch katalytische Trimerisierung einer Zusammensetzung A), wobei die Zusammensetzung A) oligomere, modifizierte Polyisocyanate B) enthält, die ein Reaktionsprodukt aus einem oligomeren Polyisocyanat B1) und mindestens einem gegenüber Isocyanatgruppen reaktiven Funktionalisierungsreagenz B2) darstellen, wobei die Zusammensetzung A) einen Gehalt an monomeren Diisocyanaten von höchstens 20 Gew.-% aufweist und wobei das mindestens eine gegenüber Isocyanatgruppen reaktive Funktionalisierungsreagenz B2) mindestens eine gegenüber Isocyanatgruppen reaktive funktionelle Gruppe aufweist, die keine Isocyanatgruppe ist. Die Erfindung betrifft ferner das Verfahren aus dem die erfindungsgemäßen Polyisocyanuratkunststoffe erhältlich sind, die Verwendung der erfindungsgemäßen Polyisocyanuratkunststoffe zur Herstellung von Beschichtungen, Folien, Halbzeugen, Verbundteilen und Formteilen sowie mit einer solchen Beschichtung beschichtete Substrate.

## Beschreibung

Die Erfindung betrifft einen modifizierten Polyisocyanuratkunststoff, ein Verfahren zu dessen Herstellung, dessen Verwendung zur Herstellung von Beschichtungen, Folien, Halbzeugen, Verbundmaterialien oder Formteilen sowie mit einer solchen Beschichtung beschichtete Substrate.

Polymere mit Polyisocyanuratstruktur sind für ihre Chemikalien- und Temperaturbeständigkeit sowie ihre hohe mechanische Festigkeit bekannt. Die bisherigen aus dem Stand der Technik bekannten Verfahren zur Herstellung solcher hochumgesetzter Polyisocyanuratkunststoffe gehen dabei von flüssigen monomeren Diisocyanaten aus. Aufgrund der hohen Wärmetönung der Trimerisierungsreaktion zu Polyisocyanuraten (-75 kJ/mol NCO), ist eine Reaktion ausgehend von monomeren Diisocyanaten, besonders bei monomeren Diisocyanaten mit hohem Isocyanatgehalt (z.B. BDI, PDI, HDI, TIN), typischerweise nicht im Großmaßstab sondern nur in kleinen Substanzmengen unter strikter Temperaturkontrolle möglich.

Die Temperaturkontrolle bei der Herstellung von hochumgesetzten Polyisocyanuraten ist von enormer Bedeutung, da aufgrund der hohen Isocyanatgehalte der monomeren Ausgangsprodukte und der exotherm verlaufenden Reaktion Temperaturen von über 300 °C entstehen können, die zur direkten Zersetzung der Produkte und sogar zur in situ Verdampfung der monomeren Diisocyanate führen können. Neben den arbeitshygienischen Nachteilen durch die freigesetzten toxischen monomeren Diisocyanate oder Zersetzungsprodukte, ist dabei die Bildung von Blasen und Verfärbungen im fertigen Polyisocyanuratkunststoff sehr störend.

WO 2015/166983 beschreibt Polyisocyanuratkunststoffe, die durch Polymerisierung von oligomeren Polyisocyanaten erhalten werden. Die Verwendung dieser Kunststoffe als Vergussmasse für LEDs wird ebenfalls beschrieben. Nicht offenbart ist die Verwendung hydrophil modifizierter Polyisocyanate als Rohstoff.

US 6,133,397 beschreibt die Herstellung von Beschichtungen durch Polymerisation oligomerer Polyisocyanate. Nicht offenbart ist die Herstellung von Formteilen und die Verwendung hydrophil modifizierter Ausgangspolyisocyanate.

Praktische Anwendungen finden Polyisocyanurate daher bisher üblicherweise nur als Vernetzungsmittel in der Lackchemie, bei deren Herstellung die Trimerisierungsreaktion bereits bei niedrigen Umsätzen gestoppt wird und überschüssiges nicht abreagiertes monomeres Diisocyanat entfernt wird. So sehen die DE 31 00 263; GB 952 931, GB 966 338; US 3211703, US 3330828 bei der Herstellung von Vernetzungsmitteln auf Basis von Isocyanuraten ausgehend von aliphatischen und gemischt aliphatischen und aromatischen monomeren Diisocyanaten entweder eine Durchführung der Reaktion in Verdünnung oder nur bis zu niedrigen Umsatzwerten bei sehr genauer Temperaturkontrolle vor. Dabei entstehen gezielt keine hochumgesetzten Polyisocyanuratkunststoffe sondern nur oligomere, niedrigviskose, lösliche Produkte.

Den aus dem Stand der Technik bekannten Verfahren ist gemeinsam, dass die Trimerisierung bei niedrigen Temperaturen gestartet wird. Höhere Trimerisierungstemperaturen besonders zu Beginn der Trimerisierung sind ausgehend von monomeren Diisocyanaten nur schwer zu kontrollieren und führen zu erheblichen Nebenreaktionen in Form von Uretdionen, Carbodiimiden und sind somit ursächlich für Blasenbildung durch Kohlenstoffdioxid Abspaltung und Verfärbung des erhaltenen Produkts. Einzige Ausnahme ist die Trimerisierung in Gegenwart von hohen Konzentrationen extrem träger Katalysatoren wie z.B. Tributylzinnoxid. Die so durchgeführten typischerweise mehrstündigen Vorreaktionen zu geringen Isocyanat Umsätzen von ca. 50 % bei Temperaturen oberhalb von 100 °C sind zur Herstellung von Volumenkörpern aus Polyisocyanuratkunststoff zu aufwendig und daher großtechnisch nicht interessant.

Weiter ist den beschriebenen Verfahren gemein, dass sie nicht geeignet sind, um in effizienten technischen Verfahren hochumgesetzte Polyisocyanurate mit einem niedrigen Restgehalt an freien Isocyanatgruppen zu erhalten, insbesondere solche, die weitestgehend frei von störenden Defekten in Form von Verfärbungen, Inhomogenitäten und z.B. unerwünschten Blasen sind. Auch kann gemäß den aus dem Stand der Technik bekannten Verfahren auf diese Weise nicht in offenen Reaktionsgefäßen bei erhöhten Temperaturen polymerisiert werden, ohne eine signifikante Freisetzung von monomeren Diisocyanaten in die Umgebung zu riskieren. Demgegenüber zeichnen sich technisch effiziente Verfahren durch hohe Umsatzraten und eine hohe arbeitshygienische Verfahrenssicherheit aus.

Hochintegrierte neue Technologien, z.B. im Bereich der Kommunikation, im Transportwesen, in der Medizin, in der Mikroelektronik und in der Mikrosystemtechnik, sowie für die effektive Erzeugung, Speicherung und Nutzung von Energie, erfordern Materialien mit neuartigen, genau definierten Eigenschaften und optimal angepassten Funktionalitäten. Kunststoffe besitzen hierfür ein hohes Potential, da sie sich für eine Vielzahl von Anwendungen maßschneidern lassen und auch selbst Funktionen übernehmen können.

Aktuelle Verfahren versuchen dieses Potential durch die Entwicklung von Funktionspolymeren und nanostrukturierten (Hybrid-)Materialien zu erschließen. Sie zielen auf die exakte Einstellung der Architektur, Funktionalität, Selbstorganisation und Nanostruktur von Kunststoffen ab.

Generell ist es für eine Funktionsintegration wünschenswert, dass die Materialien reproduzierbar, langzeitstabil in ihrer Funktion, umweltverträglich und kostengünstig mit der gewünschten Funktionalität und Morphologie in hochintegrierte Bauteile und komplexe Materialverbunde eingebaut werden können.

Die aus dem Stand der Technik bekannten Verfahren, einen Kunststoff in einer gewünschten Weise homogen zu funktionalisieren, folgen ganz überwiegend folgenden Strategien:
Zum einen wird Funktionalität realisiert, indem man dem Kunststoff funktionale Additive und Füllstoffe beimischt. So lässt sich beispielsweise isotrope wie anisotrope elektrische, in einigen Fällen sogar thermische Leitfähigkeit dadurch erreichen, dass man Leitruße, Carbon-Nanotubes oder Graphene in den Kunststoff einarbeitet. Nachteilig an dieser Herangehensweise ist, dass beim Einmischen der Additive bzw. Füllstoffe die Eigenschaften des Bulkmaterials mit zunehmendem Additiv bzw. Füllstoffgehalt verändert werden. Beispielsweise kommt es häufig aufgrund fehlender Kompatibilität und fehlender kovalenter Bindungen des Additivs bzw. Füllstoffs mit dem Kunststoff zur Ausbildung von nicht überbrückten Phasengrenzen, die für eine Verschlechterung der mechanischen Eigenschaften des Kunststoffs sorgen.

Zum anderen ist es für viele Anwendungen ausreichend, lediglich die Oberfläche von fertig hergestellten und aus dem Stand der Technik bekannten Kunststoffen zu funktionalisieren.

Alternativ zu diesen in der Praxis bewährten Vorgehensweisen ist es grundsätzlich auch denkbar, von einem bereits funktionalisierten Monomerbaustein auszugehen, der dann homo- oder co-polymerisiert wird, um einen funktionalisierten Kunststoff zu erhalten. Diese Vorgehensweise erweist sich in der Praxis jedoch oftmals als schwierig.

Gerade im Bereich der Polyisocyanuratkunststoffe war diese alternative Herangehensweise zur Modifizierung eines Kunststoffs, um einen modifizierten Polyisocyanuratkunststoff zu erhalten, je nach gewünschter Funktionalisierung des Polyisocyanuratkunststoffs, aufgrund seiner ohnehin schon schwer zu kontrollierenden Herstellung, eine echte Herausforderung.

Nicht modifizierte Polyisocyanuratkunststoffe sind eher hydrophob. Für viele Anwendungsgebiete, insbesondere im Beschichtungs- oder Klebstoffbereich, werden jedoch polare bzw. leicht hydrophile Materialien benötigt, um die Haftung auf anderen Substraten zu ermöglichen oder auch die Haftung von Klebstoffen oder Beschichtungen, wie z.B. Lacken, auf den Polyisocyanuratkunststoffen zu erlauben. Weiterhin werden hydrophile Lacke als anti-Beschlagbeschichtungen (anti-fog-coating) im Bereich von Brillen und optischen Linsen verwendet.

Der Erfindung lag somit die Aufgabe zugrunde, ein effizientes technischen Verfahren zur Herstellung von hochumgesetzten hydrophil modifizierten Polyisocyanuratkunststoffen zu entwickeln, die sich durch hohe Transparenz und gute mechanische Eigenschaften auszeichnen. Idealerweise sollten diese modifizierten Polyisocyanuratkunststoffe ohne Defekte wie Blasen, Schlieren und Verfärbung.

Diese Aufgabe wird erfindungsgemäß durch den in Anspruch 1 angegebenen Polyisocyanuratkunststoff, die in den Ansprüchen 14 bis 16 angegebenen Verwendungen und Erzeugnisse sowie das in Anspruch 17 angegebene Verfahren gelöst.

Vorteilhafte Ausgestaltungen der Erfindung sind in den abhängigen Ansprüchen angegeben und werden nachfolgend, wie der allgemeine Erfindungsgedanke, im Einzelnen erläutert.

Gegenstand der Erfindung ist ein modifizierter Polyisocyanuratkunststoff, der durch katalytische Trimerisierung einer Zusammensetzung A) erhältlich ist, wobei die Zusammensetzung A) oligomere, modifizierte Polyisocyanate B) enthält, die ein Reaktionsprodukt aus einem oligomeren Polyisocyanat B1) und mindestens einem gegenüber Isocyanatgruppen reaktiven Funktionalisierungsreagenz B2) darstellen, wobei die Zusammensetzung A) einen Gehalt an monomeren Diisocyanaten von höchstens 20 Gew.-% aufweist und wobei die mindestens ein gegenüber Isocyanatgruppen reaktives Funktionalisierungsreagenz B2) mindestens eine gegenüber Isocyanatgruppen reaktive funktionelle Gruppe aufweist, die keine Isocyanatgruppe ist.

Der erfindungsgemäße modifizierte Polyisocyanuratkunststoff lässt sich durch das folgende Verfahren herstellen, welches ebenfalls Gegenstand der Erfindung ist. Das erfindungsgemäße Verfahren umfasst dabei die folgenden Schritte:
a1) Bereitstellen einer Zusammensetzung A) enthaltend oligomere, modifizierte Polyisocyanate B) und höchstens 20 Gew.-% an monomeren Diisocyanaten, bezogen auf das Gewicht der Zusammensetzung A), wobei die oligomeren, modifizierten Polyisocyanate B) ein Reaktionsprodukt aus einem oligomeren Polyisocyanat B1) und mindestens einem gegenüber Isocyanatgruppen reaktiven Funktionalisierungsreagenz B2) darstellen, und wobei das mindestens eine gegenüber Isocyanatgruppen reaktive Funktionalisierungsreagenz B2) mindestens eine gegenüber Isocyanatgruppen reaktive funktionelle Gruppe aufweist, die keine Isocyanatgruppe ist;
a2) katalytische Trimerisierung der Zusammensetzung A).

Darüber hinaus ist Gegenstand der Erfindung auch die Verwendung der erfindungsgemäßen Polyisocyanuratkunststoffe zur Herstellung von Beschichtungen, Klebstoffen, Folien, Halbzeugen, Verbundmaterialien und Formteilen sowie mit dem erfindungsgemäßen Polyisocyanuratkunststoff beschichtete Substrate.

Die nachfolgend näher beschriebene Erfindung beruht auf der überraschenden Beobachtung, dass sich eine Zusammensetzung, welche oligomere, modifizierte Polyisocyanate enthält durch katalytische Trimerisierung derart aushärten lässt, dass hochumgesetzte transparente, blasenfreie modifizierte Polyisocyanuratkunststoffe mit neuartigen Eigenschaften entstehen. Dabei war es insbesondere überraschend, dass die Trimerisierungsreaktion zu hochumgesetzten, transparenten, blasenfreien Polyisocyanuratkunststoffen führt, obwohl die oligomeren, modifizierten Polyisocyanate durch Umsetzung oligomerer Polyisocyanate mit hydrophilen Funktionalisierungsreagenzien erhalten werden. Trotz der hohen Hydrophilie der oligomeren, modifizierten Polyisocyanate wurden die erwarteten Nebenreaktionen der Isocyanatgruppen mit Wasser bzw. Luftfeuchtigkeit, die unter Abspaltung von Kohlenstoffdioxid zu Harnstoffen und damit zu stark blasenhaltigen, trüben nur eingeschränkt nutzbaren modifizierten Polyisocyanuraten führen können, erstaunlicherweise nicht beobachtet.

Ferner hätte der Fachmann erwartet, dass sich beispielsweise bei mit hydrophilen Gruppen modifizierten Ausgangspolyisocyanaten Probleme hinsichtlich einer Entmischung und zu Inhomogenität führenden Selbstorganisation in hydrophile und hydrophobe Bereiche innerhalb des modifizierten Polyisocyanuratkunststoffs einstellen können. Überraschenderweise scheinen die erfindungsgemäß erhältlichen modifizierten Polyisocyanuratkunststoffe jedoch keine damit zusammenhängenden nachteiligen Eigenschaften aufzuweisen.

Die Verwendung von Zusammensetzungen, enthaltend oligomere, modifizierte Polyisocyanate, anstelle monomerer Diisocyanate als Ausgangsmaterialien zur Herstellung von modifizierten Polyisocyanuratkunststoffen hat darüber hinaus den Vorteil gezeigt, dass aufgrund der niedrigeren Isocyanatgehalte der oligomeren Edukte eine deutlich geringere Reaktionswärme während des Aushärtens abzuführen ist, was insbesondere eine schnelle Trimerisierungsreaktion bei kurzen Reaktionszeiten und hohen Temperaturen ermöglicht.

Ein "Polyisocyanuratkunststoff", wie hier verwendet, ist ein Kunststoff, der Polyisocyanurat enthält. Er kann auch vorwiegend aus einem Polyisocyanurat bestehen. Blends aus Polyisocyanuraten und anderen Kunststoffen fallen ebenfalls unter den Begriff "Polyisocyanuratkunststoff", wie hier verwendet.

Wenn hier von "Kunststoff" die Rede ist, so ist damit ein Produkt gemeint, welches bei Raumtemperatur - im Gegensatz zu beispielsweise Gelen oder Flüssigkeiten - weitestgehend formbeständig ist. Der Begriff "Kunststoff", wie hier verwendet, umfasst alle üblichen Kunststoffklassen, d.h. insbesondere auch Duroplaste, Thermoplaste und Elastomere.

Ein "Polyisocyanurat", wie hier verwendet, ist jedes Molekül, vorzugsweise ein Polymer, welches eine Pluralität an Isocyanurat Struktureinheiten, beispielsweise mindestens 10 Isocyanurat Struktureinheiten, aufweist. Ein Molekül mit einer einzigen Isocyanurat Struktureinheit kann als "Isocyanurat" bezeichnet werden.

Die charakteristische, zyklische Isocyanurat Struktureinheit ist in folgender Strukturformel wiedergegeben:

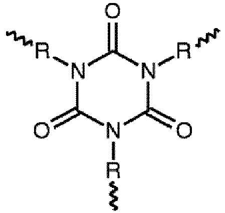

Isocyanurate und Polyisocyanurate lassen sich durch Cyclotrimerisierung von Polyisocyanaten erhalten. Die klassischerweise betriebene Cyclotrimerisierung ausgehend von monomeren Diisocyanaten ist - wie oben beschrieben - eine stark exotherm verlaufenden Reaktion. Dies kann die Anwendungsmöglichkeiten sowie die technisch und effizient noch realisierbaren Trimerisierungsgrade erheblich einschränken.

Der Begriff "Polyisocyanat", wie hier verwendet, ist eine Sammelbezeichnung für Verbindungen, die im Molekül zwei oder mehrere Isocyanat-Gruppen (hierunter versteht der Fachmann freie Isocyanat-Gruppen der allgemeinen Struktur -N=C=0) enthalten. Einfachste und wichtigste Vertreter dieser Polyisocyanate sind die Diisocyanate. Diese haben die allgemeinen Struktur O=C=N-R-N=C=O, wobei R üblicherweise für aliphatische, alicyclische und/oder aromatische Reste steht.

Aus Polyisocyanaten lassen sich wegen der Mehrfachfunktionalität (≥ 2 Isocyanat-Gruppen) eine Vielzahl von Polymeren (z.B. Polyurethane, Polyharnstoffe und Polyisocyanurate) und niedermolekularen Verbindungen (z.B. solche mit Uretdion-, Isocyanurat-, Allophanat-, Biuret-, Iminooxadiazindion- und/oder Oxadiazintrionstruktur) herstellen.

Wenn hier allgemein von "Polyisocyanaten" die Rede ist, so sind damit monomere und/oder oligomere Polyisocyanate gleichermaßen gemeint. Zum Verständnis vieler Aspekte der Erfindung ist es jedoch wichtig, zwischen monomeren Diisocyanaten und oligomeren Polyisocyanaten zu unterscheiden. Wenn hier von "oligomeren Polyisocyanaten" die Rede ist, dann sind damit Polyisocyanate gemeint, die aus mindestens zwei monomeren Diisocyanatmolekülen aufgebaut sind, d.h. es sind Verbindungen, die ein Reaktionsprodukt aus mindestens zwei monomeren Diisocyanatmolekülen darstellen oder enthalten.

Die Herstellung oligomerer Polyisocyanate aus monomeren Diisocyanaten wird hier auch als Oligomerisierung monomerer Diisocyanate bezeichnet. Diese "Oligomerisierung", wie hier verwendet, bedeutet dabei die Reaktion monomerer Diisocyanate zu oligomeren Polyisocyanaten mit Uretdion-, Isocyanurat-, Allophanat-, Biuret-, Iminooxadiazindion- und/oder Oxadiazintrionstruktur.

So ist z.B. Hexamethylendiisocyanat (HDI) ein "monomeres Diisocyanat", da es zwei Isocyanat-Gruppen enthält und kein Reaktionsprodukt aus mindestens zwei Polyisocyanatmolekülen darstellt:

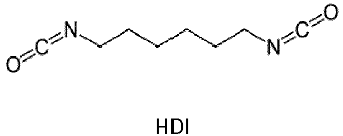

Reaktionsprodukte aus mindestens zwei HDI-Molekülen, die immer noch über mindestens zwei Isocyanat-Gruppen verfügen, sind demgegenüber "oligomere Polyisocyanate" im Sinne der Erfindung. Vertreter solcher "oligomerer Polyisocyanate" sind ausgehend von dem monomeren HDI z.B. das HDI-Isocyanurat und das HDI-Biuret, die jeweils aus drei monomeren HDI Bausteinen aufgebaut sind:

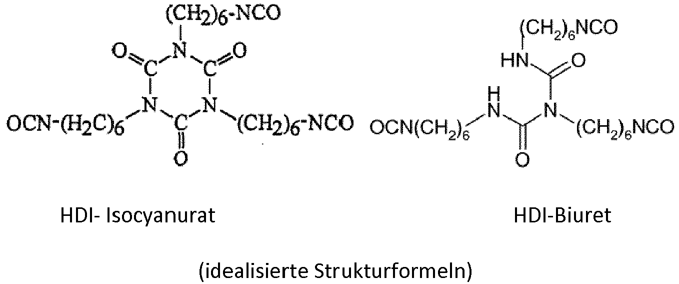

Der erfindungsgemäße modifizierte Polyisocyanuratkunststoff ist durch das erfindungsgemäße Verfahren erhältlich. Im Folgenden werden daher Ausführungsformen beschrieben, die sowohl auf den durch das erfindungsgemäße Verfahren erhältlichen erfindungsgemäßen modifizierten Polyisocyanuratkunststoff als auch auf das erfindungsgemäße Verfahren als solches zutreffen.

Erfindungsgemäß ist die als Edukt für die Herstellung des erfindungsgemäßen modifizierten Polyisocyanuratkunststoffs eingesetzte Zusammensetzung A) monomerarm (d.h. arm an monomeren Diisocyanaten) und enthält bereits oligomere, modifizierte Polyisocyanate B).

Gemäß einer Ausführungsform der Erfindung besteht die Zusammensetzung A) vollständig oder zu mindestens 80, 85, 90, 95, 98, 99 oder 99,5 Gew.-%, jeweils bezogen auf das Gewicht der Zusammensetzung A), aus oligomeren, modifizierten Polyisocyanaten B).

Die erfindungsgemäß vorgesehene Anwesenheit oligomerer, modifizierter Polyisocyanate B) und die hierfür angegebenen Gehalte beziehen sich auf die ursprünglich, d.h. vor Beginn der katalytischen Trimerisierung bereitgestellte Zusammensetzung A), d.h. diese werden nicht etwa während des Verfahrens als Zwischenprodukte gebildet, sondern die oligomeren, modifizierten Polyisocyanate B) liegen bereits zu Beginn der Reaktion, als Reaktionsprodukt aus einem oligomeren Polyisocyanat B1) und mindestens einem gegenüber Isocyanatgruppen reaktiven Funktionalisierungsreagenz B2), in der als Edukt bei der katalytischen Trimerisierung eingesetzten Zusammensetzung A) vor.

Bei dem erfindungsgemäßen Verfahren entstehen modifizierte Polyisocyanuratkunststoffe mit einer weitestgehend homogenen Verteilung der Modifizierung im Polyisocyanuratkunststoff, d.h. es liegt als Produkt kein Polyisocyanuratkunststoff vor, der ausschließlich an der Oberfläche modifiziert ist.

"Monomerarm" und "arm an monomeren Diisocyanaten" wird hier in Bezug auf die Zusammensetzung A) synonym verwendet.

Besonders praxisgerechte Ergebnisse stellen sich ein, wenn die Zusammensetzung A) einen Anteil an monomeren Diisocyanaten in der Zusammensetzung A) von höchstens 20 Gew.-%, insbesondere höchstens 15 Gew.-% oder höchstens 10 Gew.-%, jeweils bezogen auf das Gewicht der Zusammensetzung A), aufweist. Vorzugsweise weist die Zusammensetzung A) einen Gehalt an monomeren Diisocyanaten von höchstens 5 Gew.-%, vorzugsweise höchstens 2,0 Gew.-%, besonders bevorzugt höchstens 1,0 Gew.-%, jeweils bezogen auf das Gewicht der Zusammensetzung A), auf. Besonders gute Ergebnisse stellen sich ein, wenn die Zusammensetzung A) im Wesentlichen frei von monomeren Diisocyanaten ist. Im Wesentlichen frei bedeutet dabei, dass der Gehalt an monomeren Diisocyanaten höchstens 0,5 Gew.-%, bezogen auf das Gewicht der Zusammensetzung A), beträgt.

Erfindungswesentlich ist, dass die eingesetzte Zusammensetzung A) monomerarm ist. In der Praxis lässt sich dies insbesondere dadurch erzielen, dass sich bei der Herstellung des oligomeren Polyisocyanats B1), das als Edukt für die Herstellung des oligomeren, modifizierten Polyisocyanats B) dient, an die eigentliche Oligomerisierungsreaktion in jedem Fall mindestens ein weiterer Verfahrensschritt zur Abtrennung der nicht umgesetzten überschüssigen monomeren, modifizierten Diisocyanate anschließt. Diese Monomerenabtrennung kann besonders praxisgerecht nach an sich bekannten Verfahren vorzugsweise durch Dünnschichtdestillation im Hochvakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan, erfolgen.

Erfindungsgemäß enthält die Zusammensetzung A) oligomere, modifizierte Polyisocyanate B), die ein Reaktionsprodukt aus einem oligomeren Polyisocyanat B1) und mindestens einem gegenüber Isocyanatgruppen reaktiven Funktionalisierungsreagenz B2) darstellen.

Gemäß einer bevorzugten Ausführungsform der Erfindung werden die oligomeren, Polyisocyanate B1) durch Oligomerisierung monomerer Diisocyanate mit anschließender Abtrennung nicht umgesetzter Monomere erhalten.

Die im Stand der Technik beschriebenen Verfahren zur Herstellung von Polyisocyanuratkunststoffen setzen weitestgehend monomere Diisocyanate als Edukte ein, d.h. es werden reine monomere Diisocyanate oder monomerreiche Polyisocyanatzusammensetzungen katalytisch trimerisiert. Im Gegensatz hierzu führt der erfindungsgemäße Einsatz bzw. die "Bereitstellung" einer monomerarmen Zusammensetzung A), welche bereits oligomere, modifizierte Polyisocyanate B) enthält, überraschenderweise zu einem deutlich geringeren Volumenschrumpf. Die geringere Exothermie der erfindungsgemäßen Reaktion erlaubt es zudem, hochumgesetzte Polyisocyanuratkunststoffe zu erhalten.

Vorzugsweise wird bei der erfindungsgemäßen Trimerisierungsreaktion kein monomeres Diisocyanat mitverwendet. Gemäß einer besonderen Ausführungsform der Erfindung kann jedoch die Zusammensetzung A) ein monomeres Fremddiisocyanat enthalten. Hierbei bedeutet monomeres Fremddiisocyanat, dass es sich von den monomeren Diisocyanaten, die zur Herstellung der oligomeren Polyisocyanate B1) verwendet wurden, unterscheidet. Eine Zugabe von monomerem Fremddiisocyanat kann zur Erzielung spezieller technischer Effekte, wie z.B. einer besonderen Härte vorteilhaft sein. Besonders praxisgerechte Ergebnisse stellen sich ein, wenn die Zusammensetzung A) einen Anteil an monomeren Fremddiisocyanat in der Zusammensetzung A) von höchstens 20 Gew.-%, insbesondere höchstens 15 Gew.-% oder höchstens 10 Gew.-%, jeweils bezogen auf das Gewicht der Zusammensetzung A), aufweist. Vorzugsweise weist die Zusammensetzung A) einen Gehalt an monomeren Fremddiisocyanat von höchstens 5 Gew.-%, vorzugsweise höchstens 2,0 Gew.-%, besonders bevorzugt höchstens 1,0 Gew.-%, jeweils bezogen auf das Gewicht der Zusammensetzung A), auf.

Gemäß einer weiteren besonderen Ausführungsform der Erfindung, kann die Zusammensetzung A) monomere Monoisocyanate oder monomere Isocyanate mit einer Isocyanatfunktionalität größer zwei, d.h. mit mehr als zwei Isocyanatgruppen pro Molekül, enthalten. Die Zugabe von monomeren Monoisocyanaten oder monomeren Isocyanaten mit einer Isocyanatfunktionalität größer zwei hat sich als vorteilhaft erwiesen, um die Netzwerkdichte des Polyisocyanuratkunststoffs zu beeinflussen. Besonders praxisgerechte Ergebnisse stellen sich ein, wenn die Zusammensetzung A) einen Anteil an monomeren Monoisocyanaten oder monomeren Isocyanaten mit einer Isocyanatfunktionalität größer zwei in der Zusammensetzung A) von höchstens 20 Gew.-%, insbesondere höchstens 15 Gew.-% oder höchstens 10 Gew.-%, jeweils bezogen auf das Gewicht der Zusammensetzung A), aufweist. Vorzugsweise weist die Zusammensetzung A) einen Gehalt an monomeren Monoisocyanaten oder monomeren Isocyanaten mit einer Isocyanatfunktionalität größer zwei von höchstens 5 Gew.-%, vorzugsweise höchstens 2,0 Gew.-%, besonders bevorzugt höchstens 1,0 Gew.-%, jeweils bezogen auf das Gewicht der Zusammensetzung A), auf. Vorzugsweise wird bei der erfindungsgemäßen Trimerisierungsreaktion kein monomeres Monoisocyanat oder monomeres Isocyanat mit einer Isocyanatfunktionalität größer zwei mitverwendet.

Die oligomeren Polyisocyanate B1) werden üblicherweise durch Oligomerisierung einfacher aliphatischer, cycloaliphatischer, araliphatischer und/oder aromatischer monomerer Diisocyanate oder Mischungen solcher monomeren Diisocyanate erhalten.

Die oligomeren Polyisocyanate B1) können erfindungsgemäß insbesondere Uretdion-, Isocyanurat-, Allophanat-, Biuret-, Iminooxadiazindion- und/oder Oxadiazintrionstruktur aufweisen. Gemäß einer Ausführungsform der Erfindung weisen die oligomeren Polyisocyanate B1) mindestens eine der folgenden oligomeren Strukturtypen oder deren Gemische auf:

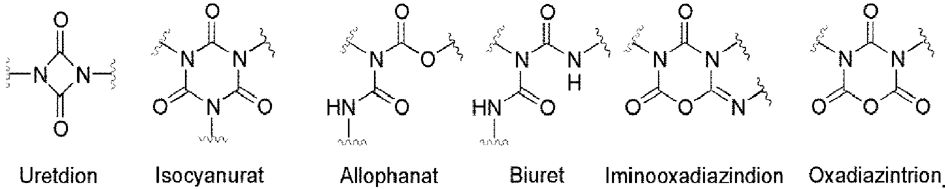

In einer besonders bevorzugten Ausführungsform der Erfindung, enthalten die oligomeren Polyisocyanate B1) wenigstens eine Struktur ausgewählt aus der Gruppe bestehend aus Uretdion, Isocyanurat, Biuret, Iminooxadiazindion und Oxadiazintrion, sind aber im Wesentlichen allophanatfrei. Der Begriff "allophanatfrei" bedeutet in diesem Zusammenhang, dass das molare Verhältnis von Allophanatgruppen zu allen im oligomeren Polyisocyanat B1) vorliegenden vorgenannten Gruppen vorzugsweise weniger als 1:99 beträgt. Stärker bevorzugt liegt das molare Verhältnis von Allophanat- zu Isocyanurat-Gruppen unter 1:99. Besonders bevorzugt enthält das oligomere Polyisocyanat B1) keine Allophanatgruppe. Alle anderen oben bezüglich des oligomeren Polyisocyanats B1 gegebenen Definitionen gelten auch für diese Ausführungsform.

Überraschend hat sich herausgestellt, dass es vorteilhaft sein kann, oligomere, modifizierte Polyisocyanate B) einzusetzen, die eine Mischung aus mindestens zwei oligomeren, modifizierten Polyisocyanaten B) darstellen, wobei sich die mindestens zwei oligomeren, modifizierten Polyisocyanate B) in ihrer Struktur unterscheiden. Die oligomere Struktur der oligomeren, modifizierten Polyisocyanate B) ist vorzugsweise ausgewählt aus der Gruppe bestehend aus Uretdion-, Isocyanurat-, Allophanat-, Biuret-, Iminooxadiazindion- und Oxadiazintrionstruktur und deren Mischungen. Derartige Ausgangsmischungen können insbesondere im Vergleich zu Trimerisierungsreaktionen mit oligomeren, modifizierten Polyisocyanaten B) nur einer definierten Struktur zu einer Beeinflussung des Tg-Wertes führen, was für viele Anwendungen vorteilhaft ist.

Bevorzugt wird erfindungsgemäß eine Zusammensetzung A), die oligomere, modifizierte Polyisocyanate B) mit Biuret-, Allophanat-, Isocyanurat-, und/oder Iminooxadiazindionstruktur und Mischungen davon enthält, eingesetzt.

Gemäß einer anderen Ausführungsform handelt es sich bei der Zusammensetzung A) um eine solche, die oligomere, modifizierte Polyisocyanate B) nur einer einzelnen definierten oligomeren Struktur, beispielsweise ausschließlich oder größtenteils Isocyanuratstruktur, enthält. In der Regel liegen in der Zusammensetzung A) herstellungsbedingt aber immer oligomere, modifizierte Polyisocyanate B) mehrerer unterschiedlicher oligomerer Strukturen nebeneinander vor.

Erfindungsgemäß werden gemäß einer weiteren Ausführungsform oligomere, modifizierte Polyisocyanate B) einer einzelnen definierten oligomeren Struktur eingesetzt, wobei die oligomere Struktur aus Uretdion-, Isocyanurat-, Allophanat-, Biuret-, Iminooxadiazindion- und/oder Oxadiazintrionstruktur ausgewählt ist.

Gemäß einer weiteren Ausführungsform handelt es sich bei den oligomeren, modifizierten Polyisocyanaten B) um solche, die hauptsächlich Isocyanuratstruktur aufweisen, und die oben genannten Uretdion-, Allophanat-, Biuret-, Iminooxadiazindion- und/oder Oxadiazintrionstruktur lediglich als Nebenprodukte enthalten dürfen.

Es ist erfindungsgemäß ebenfalls möglich oligomere, modifizierte Polyisocyanate B) einzusetzen, die weitestgehend keine Isocyanuratstruktur aufweisen, und hauptsächlich mindestens einen der oben genannten Uretdion-, Allophanat-, Biuret-, Iminooxadiazindion- und/oder Oxadiazintrion-Strukturtypen enthalten. Gemäß einer besonderen Ausführungsform der Erfindung enthält die Zusammensetzung A) oligomere, modifizierte Polyisocyanate B), die einen Strukturtyp ausgewählt aus der Gruppe bestehend aus Uretdion-, Allophanat-, Biuret-, Iminooxadiazindion- und/oder Oxadiazintrionstruktur aufweisen.

Die Uretdion-, Isocyanurat-, Allophanat-, Biuret-, Iminooxadiazindion- und/oder Oxadiazintrionstruktur in den oligomeren, modifizierten Polyisocyanaten B) sowie den oligomeren Polyisocyanaten B1) kann z.B. durch NMR-Spektroskopie bestimmt werden. Bevorzugt lässt sich hierbei die ¹³C-NMR-Spektroskopie, vorzugsweise protonenentkoppelt, einsetzen, da die genannten oligomeren Strukturen charakteristische Signale liefern.

Unabhängig vom zugrunde liegenden oligomeren Strukturtyp (Uretdion-, Isocyanurat-, Allophanat-, Biuret-, Iminooxadiazindion- und/oder Oxadiazintrionstruktur) weisen die erfindungsgemäß zur Herstellung der modifizierten, oligomeren Polyisocyanate B) verwendeten oligomeren Polyisocyanate B1) vorzugsweise eine (mittlere) NCO-Funktionalität von 2,0 bis 5,0, vorzugsweise von 2,3 bis 4,5 auf.

Die in der Zusammensetzung A) erfindungsgemäß enthaltenen oligomeren, modifizierten Polyisocyanate B) weisen unabhängig vom zugrunde liegenden oligomeren Strukturtyp (Uretdion-, Isocyanurat-, Allophanat-, Biuret-, Iminooxadiazindion- und/oder Oxadiazintrionstruktur) vorzugsweise eine (mittlere) NCO-Funktionalität von 1,8 bis 6,0, vorzugsweise von 2,0 bis 5,0 auf.

Besonders praxisgerechte Ergebnisse stellen sich ein, wenn die erfindungsgemäß einzusetzende Zusammensetzung A) einen Gehalt an Isocyanatgruppen von 8,0 bis 28,0 Gew.-% aufweist. Als besonders praxisgerecht hat es sich erwiesen, wenn die erfindungsgemäße Zusammensetzung A) einen Gehalt an Isocyanatgruppen von 14,0 bis 25,0 Gew.-%, jeweils bezogen auf das Gewicht der Zusammensetzung A), aufweist.

Herstellverfahren für die zur Herstellung der oligomeren, modifizierten Polyisocyanate B) erfindungsgemäß einzusetzenden oligomeren Polyisocyanate B1) mit Uretdion-, Isocyanurat-, Allophanat-, Biuret-, Iminooxadiazindion- und/oder Oxadiazintrionstruktur sind beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 beschrieben.

Geeignete monomere Polyisocyanate zur Herstellung der oligomeren Polyisocyanate B1) sind beliebige, auf verschiedene Weise, beispielsweise durch Phosgenierung in der Flüssig- oder Gasphase oder auf phosgenfreien Weg, wie z.B. durch thermische Urethanspaltung, zugängliche Polyisocyanate. Besonders gute Ergebnisse stellen sich ein, wenn es sich bei den Polyisocyanaten um monomere Diisocyanate handelt. Bevorzugte monomere Diisocyanate sind solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'-und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xyxlylendiisocyanat; XDI), 1,3- und 1,4-Bis(1-isocyanato-1-methylethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate. Weitere ebenfalls geeignete Diisocyanate finden sich darüber hinaus beispielsweise in Justus Liebigs Annalen der Chemie Band 562 (1949) S. 75 - 136*.*

Ferner können erfindungsgemäß auch klassische aliphatische oder aromatische Isocyanat-Endgruppentragende Prepolymere, wie beispielsweise aliphatische oder aromatische Isocyanat-Endgruppentragende Polyether-, Polyester-, Polyacrylat, Polyepoxid oder Polycarbonat-Prepolymere als Mono- und Polyisocyanate in der Zusammensetzung A) eingesetzt werden.

Geeignete monomere Monoisocyanate, die in der Zusammensetzung A) gegebenenfalls eingesetzt werden können, sind beispielsweise n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat oder beliebige Gemische solcher Monoisocyanate. Als monomeres Isocyanat mit einer Isocyanatfunktionalität größer zwei, das der Zusammensetzung A) gegebenenfalls zugesetzt werden kann, sei beispielhaft 4-Isocyanatomethyl-1,8-octandiisocyanat (Triisocyanatononan; TIN) genannt.

Gemäß einer Ausführungsform der Erfindung enthält die Zusammensetzung A) höchstens 30 Gew.-%, insbesondere höchstens 20 Gew.-%, höchstens 15 Gew.-%, höchstens 10 Gew.-%, höchstens 5 Gew.-% oder höchstens 1 Gew.-%, jeweils bezogen auf das Gewicht der Zusammensetzung A), an aromatischen Polyisocyanaten. Wie hier verwendet, bedeutet "aromatisches Polyisocyanat" ein Polyisocyanat, welches mindestens eine aromatisch gebundene Isocyanatgruppe aufweist.

Unter aromatisch gebundenen Isocyanat-Gruppen werden Isocyanat-Gruppen verstanden, die an einen aromatischen Kohlenwasserstoffrest gebunden sind.

Gemäß einer bevorzugten Ausführungsform der Erfindung wird eine Zusammensetzung A) eingesetzt, die ausschließlich aliphatisch und/oder cycloaliphatisch gebundene Isocyanat-Gruppen aufweist.

Unter aliphatisch bzw. cycloaliphatisch gebundenen Isocyanat-Gruppen werden Isocyanat-Gruppen verstanden, die an einen aliphatischen bzw. cycloaliphatischen Kohlenwasserstoffrest gebunden sind.

Gemäß einer anderen bevorzugten Ausführungsform der Erfindung wird eine Zusammensetzung A) eingesetzt, die ein oder mehrere oligomere, modifizierte Polyisocyanate B) enthält, wobei die ein oder mehreren oligomeren Polyisocyanate B) ausschließlich aliphatisch und/oder cycloaliphatisch gebundene Isocyanat-Gruppen aufweisen. Praktische Versuche haben gezeigt, dass sich besonders gute Ergebnisse mit Zusammensetzungen A) erzielen lassen, bei denen die darin enthaltenen oligomeren Polyisocyanate ausschließlich aliphatisch und/oder cycloaliphatisch gebundene Isocyanat-Gruppen aufweisen.

Gemäß einer besonders bevorzugten Ausführungsform der Erfindung wird eine Zusammensetzung A) eingesetzt, die ein oder mehrere oligomere, modifizierte Polyisocyanate B) enthält, die ein Reaktionsprodukt aus einem oder mehreren oligomeren Polyisocyanaten B1) und mindestens einem gegenüber Isocyanatgruppen reaktiven Funktionalisierungsreagenz B2) darstellen, wobei das eine oder die mehreren oligomeren Polyisocyanate B1) auf Basis von 1,5-Diisocyanatopentan (PDI), 1,6-Diisocyanatohexan (HDI), Isophorondiisocyanat (IPDI), 1,3- Bis(isocyanatomethyl)cyclohexan, 1,4-Bis(isocyanatomethyl)cyclohexan, 2,4'- Diisocyanatodicyclohexylmethan oder 4,4'-Diisocyanatodicyclohexylmethan (H12MDI) oder deren Mischungen aufgebaut sind.

Die bei der katalytischen Trimerisierung in der Zusammensetzung A) eingesetzten oligomeren, modifizierten Polyisocyanate B) weisen vorzugsweise eine geringe Viskosität auf. Wenn hier von "geringer Viskosität" die Rede ist, so ist damit gemeint, dass die oligomeren, modifizierten Polyisocyanate B) bei Raumtemperatur eine Viskosität aufweisen, die sich unterhalb des Gelpunkts der oligomeren, modifizierten Polyisocyanate B) befindet, d.h. die oligomeren, modifizierten Polyisocyanate B) liegen als Flüssigkeit und nicht als Gel vor. Als Gelpunkt wird dabei der Zeitpunkt verstanden, an dem die Vernetzungsdichte der oligomeren, modifizierten Polyisocyanate B) so weit fortgeschritten ist, dass die Viskosität der oligomeren, modifizierten Polyisocyanate B) schlagartig ansteigt und die oligomeren, modifizierten Polyisocyanate B) zu einem Polyisocyanurat-Bulkmaterial gelieren, d.h. sich nicht mehr wesentlich verformen oder fließen.

Gemäß einem wesentlichen Merkmal der vorliegenden Erfindung werden oligomere, modifizierten Polyisocyanate B) als Ausgangsstoffe für die erfindungsgemäß erhältlichen modifizierten Polyisocyanuratkunststoffe eingesetzt. Oligomere, modifizierte Polyisocyanate sind aus dem Stand der Technik grundsätzlich bekannt und beispielsweise in EP-A 0 206 059, EP-A 0 540 985, EP-A 0 959 087 und EP-A1 287 052 beschrieben. Sie werden bislang hauptsächlich als Vernetzerkomponenten für wässrige Lack- und Klebstoffformulierungen verwendet.

Vorzugsweise sind die erfindungsgemäß einzusetzenden oligomeren, modifizierten Polyisocyanate B) nichtionische oligomere, modifizierte Polyisocyanate B). Zusätzlich oder alternativ hierzu handelt es sich bei den oligomeren, modifizierten Polyisocyanaten B) um oligomere, hydrophilierte Polyisocyanate B). Das heißt, die oligomeren Polyisocyanate B) sind dadurch modifiziert, dass sie hydrophile und/oder polare Gruppen enthalten. Solche hydrophilen und/oder polaren Gruppen können insbesondere OH- oder Polyethergruppen sein. Besonders bevorzugt werden oligomere, nichtionische hydrophilierte Polyisocyanate B) eingesetzt. Derartige Polyisocyanate sowie deren Herstellung aus einem oligomerem Polyisocyanat B1) und einem hydrophile Gruppen enthaltenden sowie gegenüber Isocyanatgruppen reaktiven Funktionalisierungsreagenz B2) sind dem Fachmann aus dem Stand der Technik bekannt und beispielsweise in EP-A 0 206 059, EP-A 0 540 985, EP-A 0 959 087 und EP-A1 287 052 beschrieben. Oligomere, nichtionische hydrophilierte Polyisocyanate B), die erfindungsgemäß bevorzugt eingesetzt werden können, sind beispielsweise in Form der Bayhydur^{®} Produkte (Hersteller: Covestro Deutschland AG) kommerziell erhältlich.

Der Einfachheit halber werden die oligomeren, modifizierten Polyisocyanate B) hier durch ihre Ausgangsstoffe, als deren Reaktionsprodukt sie in der Zusammensetzung A) vorliegen, definiert. So werden die erfindungsgemäß einzusetzenden oligomeren, modifizierten Polyisocyanate B) hier definiert als Reaktionsprodukt zweier Basiskomponenten: oligomerem Polyisocyanat B1) und mindestens einem gegenüber Isocyanatgruppen reaktiven Funktionalisierungsreagenz B2). Das oligomere Polyisocyanat B1) wird dabei durch das Funktionalisierungsreagenz B2) modifiziert und damit zum "oligomeren, modifizierten Polyisocyanate B)", wie hier verwendet. Das Funktionalisierungsreagenz B2) weist dabei mindestens eine gegenüber Isocyanatgruppen reaktive Gruppe auf, die mit dem oligomeren Polyisocyanat B1) reagiert. Zusätzlich zu dieser für die Kopplung mit dem oligomeren Polyisocyanat B1) notwendige reaktive Gruppe weist das Funktionalisierungsreagenz B2) noch mindestens eine weitere funktionelle Gruppe auf, die auch im Reaktionsprodukt aus B1) und B2), d.h. dem "oligomeren, modifizierten Polyisocyanate B)", erhalten bleibt. Mit dieser zusätzlichen funktionellen Gruppe ist das oligomere, modifizierte Polyisocyanat B) dann "modifiziert" oder "funktionalisiert". Vorzugsweise handelt es sich bei dieser funktionellen Gruppe um eine hydrophile und/oder polare Gruppen, z.B. Polyether. Die Begriffe "modifiziert" und "funktionalisiert" werden hier synonym verwendet.

Die oligomeren, modifizierten Polyisocyanate B) werden üblicherweise durch partielle Umsetzung oligomerer Polyisocyanate B1) mit mindestens einem gegenüber Isocyanatgruppen reaktiven Funktionalisierungsreagenz B2) erhalten. Die Begriffe "partielle Umsetzung mit mindestens einem gegenüber Isocyanatgruppen reaktiven Funktionalisierungsreagenz" oder "modifiziert" werden im Sinne der Erfindung austauschbar verwendet und bedeuten insbesondere, dass 0,5 bis 50, vorzugsweise 1 bis 40, besonders bevorzugt 2 bis 30 mol-% der im oligomeren Polyisocyanat B1) ursprünglich vorhandenen Isocyanatgruppen mit mindestens einem gegenüber Isocyanatgruppen reaktiven Funktionalisierungsreagenz B2) umgesetzt wurden. Anders ausgedrückt weisen die durch partielle Umsetzung von oligomeren Polyisocyanaten B1) mit mindestens einem gegenüber Isocyanatgruppen reaktiven Funktionalisierungsreagenz B2) hergestellten oligomeren, modifizierten Polyisocyanate B) einen Isocyanatgehalt von 50 bis 95,5, vorzugsweise 99 bis 60, besonders bevorzugt 98 bis 70 mol-% bezogen auf die ursprünglich vorhandenen Isocyanatgruppen der oligomeren Polyisocyanate B1) auf. Wie der Ausdruck oligomere, modifizierte Polyisocyanate B) verdeutlicht, weisen diese immer noch (im Durchschnitt) eine Pluralität (mindestens zwei) an Isocyanatgruppen auf, d.h. es findet keine vollständige Umsetzung der im oligomeren Polyisocyanat B1) ursprünglich vorhandenen Isocyanatgruppen mit dem mindestens einen gegenüber Isocyanatgruppen reaktiven Funktionalisierungsreagenz B2) statt.

Als erfindungsgemäß für die Herstellung der oligomeren, modifizierten Polyisocyanate B) einzusetzende gegenüber Isocyanatgruppen reaktive Funktionalisierungsreagenzien B2) seien beispielhaft Verbindungen, enthaltend Alkohol-, Thiol-, Amin-, Epoxid-, Anhydrid-, organische Säure- und/oder Isocyanatgruppen oder Mischungen davon, genannt.

Erfindungsgemäß weist das Herstellung der oligomeren, modifizierten Polyisocyanate B) einzusetzende reaktive Funktionalisierungsreagenz B2) mindestens eine gegenüber Isocyanatgruppen reaktive Gruppe, insbesondere pro Molekül, auf, die keine Isocyanatgruppe ist.

Vorzugsweise wird als Funktionalisierungsreagenz B2) eine hydrophile Verbindung, insbesondere eine hydrophile nichtionische Verbindung oder eine hydrophile ionische Verbindung eingesetzt. Besonders bevorzugt werden im Rahmen der Erfindung als zur Herstellung der oligomeren, modifizierten Polyisocyanate B) einzusetzendes Funktionalisierungsreagenz B2) eine hydrophile nichtionische Verbindung eingesetzt.

Bevorzugt weist das mindestens eine gegenüber Isocyanatgruppen reaktive Funktionalisierungsreagenz B2) eine Oberflächenspannung von > 20 mN/m und < 70 mN/m auf.

In einer bevorzugten Ausführungsform der Erfindung ist das Funktionalisierungsreagenz B2) so gewählt, es nach Reaktion mit Polyisocyanat B1) die Oberflächenspannung von B) verglichen mit B1 um mindestens 2 mN/m, bevorzugt um mindestens 5 mN/m erhöht.

In einer weiteren bevorzugten Ausführungsform ist das Funktionalisierungsreagenz B2) so gewählt, dass es nach Reaktion mit dem Polyisocyanat B1) und katalytischer Trimerisierung der Zusammensetzung A) die Oberflächenenergie des Polyisocyanuratkunststoffes um mindestens 2 mN/m erhöht.

Beispiele für als Funktionalisierungsreagenz B2) geeignete hydrophile nichtionische Verbindungen sind Alkohole, Amine, Säuren und ihre Derivate, Epoxide und insbesondere Polyole, wie zum Beispiel Zucker, Polyacrylatpolyole, Polyesterpolyole, Polyetherpolyole, Polyvinylalkohole, Polycarbonatpolyole, Polyethercarbonatpolyole und Polyestercarbonatpolyole.

Andere bevorzugte Funktionalisierungsreagenzien sind Polyacrylsäure, Polyamide, Polysiloxane, Polyacrylamide, Polyvinylpyrrolidone, Polyvinylbutyrat, Polyketone, Polyetherketone, Polyacetale und Polyamine.

Die als Funktionalisierungsreagenz B2) erfindungsgemäß geeigneten Polyole verfügen bevorzugt über eine OH-Funktionalität von ≥ 1 bis ≤ 6. Bevorzugt sind Polyole mit einem zahlenmittleren Molekulargewicht von ≥ 100 g/mol bis ≤ 2500 g/mol und einer OH-Funktionalität von ≥ 1 bis ≤ 3, besonders bevorzugt ≤ 2. Das zahlenmittlere Molekulargewicht kann nach DIN 55672-1 durch Gelpermeationschromatographie (GPC) in Tetrahydrofuran (THF) bei 23°C bestimmt werden

Die als Funktionalisierungsreagenz B2) zur Herstellung der oligomeren, modifizierten Polyisocyanate B) einzusetzenden erfindungsgemäß in Frage kommenden Hydroxylgruppen aufweisenden Polycarbonate sind durch Reaktion von Kohlensäurederivaten, zum Beispiel Diphenylcarbonat, Dimethylcarbonat oder Phosgen mit Diolen erhältlich. Als derartige Diole kommen zum Beispiel Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A aber auch Lactonmodifizierte Diole in Frage. Bevorzugt enthält die Diolkomponente ≥ 40 Gew.-% bis ≤ 100 Gew.-% Hexandiol, bevorzugt 1,6-Hexandiol und/oder Hexandiol-Derivate, insbesondere solche, die neben endständigen OH-Gruppen Ether- oder Estergruppen aufweisen. Beispielhaft seien Produkte, die durch Umsetzung von 1 Mol Hexandiol mit mindestens 1 Mol, bevorzugt 1 bis 2 Mol Caprolacton gemäß DE-A 1 770 245 oder durch Veretherung von Hexandiol mit sich selbst zum Di- oder Trihexylenglykol erhalten wurden, genannt. Die Herstellung solcher Derivate ist zum Beispiel aus DE-A 1 570 540 bekannt. Auch die in DE-A 3 717 060 beschriebenen Polyether-Polycarbonatdiole können erfindungsgemäß als Funktionalisierungsreagenz B2) eingesetzt werden.

Die als Funktionalisierungsreagenz B2) erfindungsgemäß einsetzbaren Hydroxylpolycarbonate sollten bevorzugt linear sein. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantiol-1,2,6, Butantriol-1,2,4, Trimethylolpropan, Pentaerythrit, Chinit, Mannit, und Sorbit, Methylglykosid, 1,3,4,6-Dianhydrohexite.

Als Funktionalisierungsreagenz B2) erfindungsgemäß ebenfalls einsetzbare Polyetherpolyole sind Polytetramethylenglykolpolyether, die zum Beispiel über Polymerisation von Tetrahydrofuran durch kationische Ringöffnung hergestellt werden können.

Darüber hinaus erfindungsgemäße als Funktionalisierungsreagenz B2) geeignete Polyetherpolyole sind die unter Verwendung von Startermolekülen hergestellten Polyadditionsprodukte des Ethylenoxids, Propylenoxids, Butylenoxids, Styroloxids oder Epichlorhydrins, sowie deren Misch- und Pfropfpolyadditionsprodukte sowie die durch Kondensation von mehrwertigen Alkoholen oder deren Mischungen und die durch Alkoxylierung von Wasser, mehrwertigen Alkoholen, Aminen oder Aminoalkoholen gewonnenen Polyether.

Gemäß einer bevorzugten Ausführungsform werden erfindungsgemäß Homo- und/oder Mischpolyadditionsverbindungen von Ethylenoxid und/oder Propylenoxid eingesetzt.

Polyesterpolyole, die sich für den Einsatz als Funktionalisierungsreagenz B2) zur Herstellung der oligomeren, modifizierten Polyisocyanate B) eignen, sind beispielsweise die an sich bekannten Polykondensate aus Di- sowie gegebenenfalls Tri-, und Tetraolen und Disowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele hierfür geeigneter Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden. Geeignete Dicarbonsäuren sind in diesem Zusammenhang beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2 Methylbernsteinsäure, 3,3-Diethylglutarsäure und/oder 2,2-Dimethylbernsteinsäure. Als Säurequelle können auch die entsprechenden Anhydride verwendet werden. Sofern die mittlere Funktionalität des zu veresternden Polyols größer als 2 ist, können zusätzlich auch Monocarbonsäuren, wie Benzoesäure und Hexancarbonsäure mitverwendet werden. Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind Caprolacton, Butyrolacton und Homologe. Bevorzugt ist Caprolacton.

Gemäß einer bevorzugten Ausführungsform der Erfindung werden Polyesterpolyole basierend auf Adipinsäure und Ethylenglykol, 1,4-Butandiol, Neopentylglykol und/oder 1,6-Hexandiol als Funktionalisierungsreagenz B2) eingesetzt.

Dazu kommen monofunktionelle Alkohole und Monoamine zum Einsatz als Funktionalisierungsreagenz B2) in Betracht. Bevorzugte Monoalkohole sind aliphatische Monoalkohole mit 1 bis 18 C-Atomen, wie zum Beispiel Ethanol, n-Butanol, Ethylenglykolmonobutylether, 2-Ethylhexanol, 1-Octanol, 1-Dodecanol oder 1-Hexadecanol. Bevorzugte Monoamine sind aliphatische Monoamine, wie zum Beispiel Diethylamin, Dibutylamin, Ethanolamin, N-Methylethanolamin oder N,N-Diethanolamin und Amine der Jeffamin® M-Reihe (Huntsman Corp. Europe, Belgien) oder aminofunktionelle Polyethylenoxide und Polypropylenoxide.

Ebenfalls als Funktionalisierungsreagenz B2) geeignet sind Polyole, Aminopolyole oder Polyamine mit einem Molgewicht unter 400 g/mol.

Als Funktionalisierungsreagenz B2) geeignete nichtionische hydrophile Verbindungen sind zum Beispiel Polyoxyalkylenether, die mindestens eine Hydroxy- oder Aminogruppe enthalten. Diese Polyether enthalten einen Anteil von 30 Gewichts-% bis 100 Gewichts-% an Ethylenoxideinheiten. In Frage kommen linear aufgebaute Polyether einer Funktionalität zwischen 1 und 3, aber auch Verbindungen der allgemeinen Formel (III), 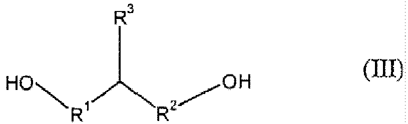 in welcher
R¹ und R² unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und R³ für einen alkoxyterminierten Polyethylenoxidrest steht.

Weitere als Funktionalisierungsreagenz B2) geeignete hydrophile nichtionische Verbindungen sind Polyetheralkohole, insbesondere Polyalkylenoxidpolyetheralkohole, vorzugsweise ein- oder mehrwertige, im statistischen Mittel 5 bis 50 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38). Solche Startermoleküle können beispielsweise beliebige ein- oder mehrwertige Alkohole des Molekulargewichtsbereiches 32 bis 300 sein, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n Tetradecanol, n-Hexadecanol, n-Octadecanol, Cyclohexanol, die isomeren Methylcyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol, Tetrahydrofurfurylalkohol, 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Geeignete Polyetheralkohole sind entweder reine Polyethylenoxidpolyetheralkohole oder gemischte Polyalkylenoxidpolyether, deren Alkylenoxideinheiten zu mindestens 70 mol-%, vorzugsweise zu mindestens 80 mol-% aus Ethylenoxideinheiten bestehen.

Gemäß einer Ausführungsform der der Erfindung ist das zur Herstellung des oligomeren, modifizierten Polyisocyanats B) verwendete Funktionalisierungsreagenz B2) ein Polyetheralkohol.

Gemäß einer bevorzugten Ausführungsform der Erfindung wird zur Herstellung des oligomeren, modifizierten Polyisocyanats B) als Funktionalisierungsreagenz B2) ein Polyalkylenoxidpolyetheralkohol eingesetzt, insbesondere ein solcher, der unter Verwendung der oben genannten Monoalkohole des Molekulargewichtsbereiches 32 bis 150 als Startermoleküle hergestellt wurde.

Gemäß einer besonders bevorzugten Ausführungsform der Erfindung ist das zur Herstellung des oligomeren, modifizierten Polyisocyanats B) verwendete Funktionalisierungsreagenz B2) ein Polyetheralkohol, der ein reiner Polyethylenglycolmonomethyletheralkohol ist, insbesondere ein solcher, der im statistischen Mittel 5 bis 50, ganz besonders bevorzugt 5 bis 25 Ethylenoxideinheiten aufweist.

Die Herstellung solcher bevorzugter oligomerer, modifizierter Polyisocyanate B) ist prinzipiell bekannt und beispielsweise in EP-A 0 206 059 und EP-A 0 540 985 beschrieben. Sie erfolgt im Allgemeinen unter Einhaltung eines NCO/OH-Äquivalentverhältnisses von 2:1 bis 6:1, vorzugsweise bei Temperaturen von 40 bis 180 °C.

Beispiele für als Funktionalisierungsreagenz B2) erfindungsgemäß geeignete hydrophile ionische Verbindungen, die entweder kationischer oder anionischer Natur sein können, sind solche, die beispielsweise Sulfonium-, Ammonium-, Phosphonium-, Carboxylat-, Sulfonat-, Phosphonat-Gruppen oder Gruppen, die durch Salzbildung in die vorgenannten Gruppen überführt werden können (potentiell ionische Gruppen), enthalten und durch vorhandene gegenüber Isocyanatgruppen reaktive funktionelle Gruppen mit Isocyanatgruppen des oligomeren Polyisocyanat B1) unter Bildung des oligomeren, modifizierten Polyisocyanats B) reagieren können.

Geeignete ionische oder potentiell ionische Verbindungen, die als Funktionalisierungsreagenz B2) eingesetzt werden können, sind zum Beispiel Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, 1,2- oder 1,3-Propylendiamin-β-ethylsulfonsäure, Ethylendiamin-propyl- oder -butylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, zum Beispiel beschrieben in DE-A 2 446 440 (Seite 5-9, Formel I-III) sowie in kationische Gruppen überführbare Bausteine wie N-Methyl-diethanolamin als hydrophile Aufbaukomponenten. Bevorzugte ionische oder potentielle ionische Verbindungen sind solche, die über Carboxy- oder Carboxylat- und/oder Sulfonatgruppen und/oder Ammoniumgruppen verfügen.

Besonders bevorzugte als Funktionalisierungsreagenz B2) erfindungsgemäß einsetzbare ionische Verbindungen sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure. Ganz besonders bevorzugt ist das Funktionalisierungsreagenz B2) ausgewählt aus den Natriumsalzen von N-(2-Aminoethyl)-β-alanin oder 2-(2-Amino-ethylamino-)-ethansulfonsäure oder aus Dimethylpropionsäure. In einer vorteilhaften Ausführungsform der Erfindung werden sowohl Natriumsalze von N-(2-Aminoethyl)-β-alanin oder 2-(2-Amino-ethylamino-)-ethansulfonsäure, als auch Dimethylpropionsäure als Funktionalisierungsreagenz B2) eingesetzt.

Weiterhin ist erfindungsgemäß auch die Verwendung von Aminosäuren als Funktionalisierungsreagenz B2) möglich.

Die Herstellung des oligomeren, modifizierten Polyisocyanats B) durch partielle Umsetzung oligomerer Polyisocyanate B1) mit mindestens einem gegenüber Isocyanatgruppen reaktiven Funktionalisierungsreagenz B2) kann in Gegenwart geeigneter Katalysatoren B3) erfolgen, die die Reaktion des Funktionalisierungsreagenzes B2) mit dem oligomeren Polyisocyanat B1) fördern. Dabei handelt es sich insbesondere um gebräuchliche Katalysatoren B3), die die Reaktion von Isocyanat-reaktiven Verbindungen mit Isocyanaten katalysieren. Beispielhaft genannt seien Urethanisierungskatalysatoren, wie zum Beispiel Triethylamin, 1,4-Diazabicyclo-[2,2,2]-octan, Dibutylzinnoxid, Zinndioktoat, Dibutylzinndilaurat, Zinn-bis-(2-ethylhexanoat), Zinkdioktoat, Zink-bis-(2-ethylhexanoat) oder andere metallorganischen Verbindungen. Als besonders praxisgerecht hat es sich erwiesen, wenn als Katalysator B3) einen Katalysator, ausgewählt aus Dibutylzinndilaurat, Zinkdioktoat und Zink-bis-(2-ethylhexanoat), eingesetzt wird. Bevorzugt wird der Katalysator B3), ausgewählt aus Zink-bis-(2-ethylhexanoat) und Katalysatoren B3), die die Bildungen von Oxazolidinonen und auch Isocyanuraten unterstützen sowie Mischungen davon. Die Katalysatoren B3) können ferner, je nach Zusammensetzung der Reaktionsmischung, Auswahl des Funktionalisierungsreagenzes B2) und Reaktionsbedingungen, auch aus den untenstehend für die Katalysatoren C) aufgezählten Verbindungen in den entsprechenden Mengen und gegebenenfalls unter Verwendung der unten angegebenen Katalysatorlösungsmittel ausgewählt sein.

In einer bevorzugten Ausführungsform der Erfindung enthält die Zusammensetzung A) zusätzlich zu den oben beschriebenen oligomeren, modifizierten Polyisocyanaten B) auch oligomere, unmodifizierte Polyisocyanate BU. Besagte oligomere, unmodifizierte Polyisocyanate BU können in der Zusammensetzung A) enthalten sein, da die Funktionalisierung eines oligomeren Polyisocyanats B1) mit dem gegenüber Isocyanatgruppen reaktiven Funktionalisierungsreagenz B2) nicht zur Funktionalisierung aller oligomeren Polyisocyanatmoleküle von B1) führt. Der Funktionalisierungsgrad der oligomeren modifizierten Polyisocyanate B) ist durch das stöchiometrische Verhältnis des oligomeren Polyisocyanats B1) und des Funktionalisierungsreagenzes B2) einstellbar. Im Rahmen der vorliegenden Erfindung ist es aber bevorzugt, dass zur Herstellung der Zusammensetzung A) oligomere unmodifizierte oligomere Polyisocyanate BU mit den oligomeren modifizierten Polyisocyanaten B) abgemischt werden.

Die Merkmale der unmodifizierten oligomeren Polyisocyanate BU) entsprechen den oben definierten Merkmalen der modifiziertem Polyisocyanate B) mit Ausnahme der Modifikation durch das Funktionalisierungsreagenz B2), mit dem die Polyisocyanate BU) nicht umgesetzt werden.

Der Gewichtsanteil an modifizierten Polyisocyanaten B) bezogen auf das Gesamtgewicht von oligomeren modifizierten Polyisocyanaten B) und oligomeren unmodifizierten Polyiscocyanaten BU) beträgt bevorzugt wenigstens 25 Gew.-%, stärker bevorzugt wenigstens 40 Gew.-%, noch stärker bevorzugt wenigstens 50 Gew.-%, noch stärker bevorzugt wenigstens 60 Gew.-%, noch stärker bevorzugt wenigstens 70 Gew.-%, noch stärker bevorzugt wenigstens 80 Gew.-% und am stärksten bevorzugt wenigstens 90 Gew.-%.

Die erfindungsgemäßen modifizierten Polyisocyanurate sind durch katalytische Trimerisierung der Zusammensetzung A) enthaltend oligomere, modifizierte Polyisocyanate B) gemäß dem erfindungsgemäßen Verfahren erhältlich. "Katalytisch" bedeutet dabei in Gegenwart eines geeigneten Trimerisierungskatalysators C).

Geeignete Katalysatoren C) für das erfindungsgemäße Verfahren sind prinzipiell alle Verbindungen, die die Trimerisierung von Isocyanatgruppen zu Isocyanuratstrukturen beschleunigen. Vorzugsweise wird ein Trimerisierungskatalysator C) eingesetzt, der die Trimerisierungsreaktion unterhalb 25 °C, insbesondere unterhalb 30 °C, bevorzugt unterhalb 40 °C, nicht oder nicht wesentlich beschleunigt, sie oberhalb 60 °C, insbesondere oberhalb 70 °C aber signifikant beschleunigt. Nicht wesentlich beschleunigt bedeutet dabei, dass die Präsenz des Trimerisierungskatalysators C) in der Reaktionsmischung unterhalb 25 °C, insbesondere unterhalb 30 °C, bevorzugt unterhalb 40 °C, keinen wesentlichen Einfluss auf die Reaktionsgeschwindigkeit der ohnehin ablaufenden Reaktion hat. Unter einer signifikanten Beschleunigung wird verstanden, dass sich die Präsenz des thermolatenten Katalysators oberhalb 60 °C, insbesondere oberhalb 70 °C in Reaktionsmischung deutlich auf die Reaktionsgeschwindigkeit der ohnehin ablaufenden Reaktion auswirkt.

Da die Isocyanuratbildung in Abhängigkeit vom verwendeten Katalysator häufig von Nebenreaktionen, beispielsweise der Dimerisierung zu Uretdionstrukturen oder der Trimerisierung unter Bildung von Iminoxadiazindionen (sogenannten asymmetrischen Trimerisaten) und bei Vorhandensein von Urethangruppen im Ausgangspolyisocyanat von Allophanatisierungsreaktionen, begleitet wird, soll im Rahmen der vorliegenden Erfindung der Begriff "Trimerisierung" synonym auch für diese zusätzlich ablaufenden Reaktionen stehen.

Gemäß einer besonderen Ausführungsform bedeutet Trimerisierung jedoch, dass vorwiegend Cyclotrimerisierungen von mindestens 50%, vorzugsweise mindestens 60%, besonders bevorzugt mindestens 70%, insbesondere mindestens 80%, der in der Zusammensetzung A) vorliegenden Isocyanatgruppen, zu Isocyanurat Struktureinheiten katalysiert werden. Nebenreaktionen, insbesondere solche zu Uretdion-, Allophanat-, und/oder Iminooxadiazindionstrukturen treten jedoch üblicherweise auf und können sogar gezielt genutzt werden, um z.B. den Tg-Wert des erhaltenen Polyisocyanuratkunststoffs vorteilhaft zu beeinflussen.

Geeignete Katalysatoren C) für das erfindungsgemäße Verfahren sind beispielsweise einfache tertiäre Amine, wie z.B. Triethylamin, Tributylamin, N,N-Dimethylanilin, N-Ethylpiperidin oder N, N'-Dimethylpiperazin. Geeignete Katalysatoren sind auch die in der GB 2 221 465 beschriebenen tertiären Hydroxyalkylamine, wie z.B. Triethanolamin, N-Methyl-diethanolamin, Dimethylethanolamin, N-Isopropyldiethanolamin und 1-(2-Hydroxyethyl)pyrrolidin, oder die aus der GB 2 222 161 bekannten, aus Gemischen tertiärer bicyclischer Amine, wie z.B. DBU, mit einfachen niedermolekularen aliphatischen Alkoholen bestehenden Katalysatorsysteme.

Als Trimerisierungskatalysatoren C) für das erfindungsgemäße Verfahren ebenfalls geeignet sind eine Vielzahl unterschiedlicher Metallverbindungen. Geeignet sind beispielsweise die in der DE-A 3 240 613 als Katalysatoren beschriebenen Oktoate und Naphthenate von Mangan, Eisen, Cobalt, Nickel, Kupfer, Zink, Zirkonium, Cer oder Blei oder deren Gemische mit Acetaten von Lithium, Natrium, Kalium, Calcium oder Barium, die aus DE-A 3 219 608 bekannten Natrium- und Kalium-Salze von linearen oder verzweigten Alkancarbonsäuren mit bis zu 10 C-Atomen, wie z.B. von Propionsäure, Buttersäure, Valeriansäure, Capronsäure, Heptansäure, Caprylsäure, Pelargonsäure, Caprinsäure und Undecylsäure, die aus der EP-A 0 100 129 bekannten Alkali- oder Erdalkalimetallsalze von aliphatischen, cycloaliphatischen oder aromatischen Mono- und Polycarbonsäuren mit 2 bis 20 C-Atomen, wie z.B. Natrium- oder Kaliumbenzoat, die aus der GB-PS 1 391 066 und GB-PS 1 386 399 bekannten Alkaliphenolate, wie z.B. Natrium- oder Kaliumphenolat, die aus der GB 809 809 bekannten Alkali- und Erdalkalioxide, -hydroxide, -carbonate, -alkoholate und -phenolate, Alkalimetallsalze von enolisierbaren Verbindungen sowie Metallsalze schwacher aliphatischer bzw. cycloaliphatischer Carbonsäuren, wie z.B. Natriummethoxid, Natriumacetat, Kaliumacetat, Natriumacetoessigester, Blei-2-ethylhexanoat und Bleinaphthenat, die aus der EP-A 0 056 158 und EP-A 0 056 159 bekannten, mit Kronenethern oder Polyetheralkoholen komplexierten basischen Alkalimetallverbindungen, wie z.B. komplexierte Natrium- oder Kaliumcarboxylate, das aus der EP-A 0 033 581 bekannte Pyrrolidinon-Kaliumsalz, die aus der Anmeldung EP 13196508.9 bekannten ein- oder mehrkernigen Komplexverbindung von Titan, Zirkonium und/oder Hafnium, wie z.B. Zirkoniumtetra-n-butylat, Zirkoniumtetra-2-ethylhexanoat und Zirkoniumtetra-2-ethylhexylat, sowie Zinnverbindungen der in European Polymer Journal, Vol. 16, 147 - 148 (1979*)* beschriebenen Art, wie z.B. Dibutylzinndichlorid, Diphenylzinndichlorid, Triphenylstannanol, Tributylzinnacetat, Tributylzinnoxid, Zinndioktoat, Dibutyl(dimethoxy)stannan und Tributylzinnimidazolat.

Weitere für das erfindungsgemäße Verfahren geeignete Trimerisierungskatalysatoren C) sind beispielsweise die aus der DE-A 1 667 309, EP-A 0 013 880 und EP-A 0 047 452 bekannten quaternären Ammoniumhydroxyde, wie z.B. Tetraethylammoniumhydroxid, Trimethylbenzylammoniumhydroxid, N,N-Dimethyl-N-dodecyl-N-(2-hydroxyäthyl)ammoniumhydroxid, N-(2-Hydroxyäthyl)-N,N-dimethylN-(2,2'-dihydroxymethylbutyl)-ammoniumhydroxid und 1-(2-Hydroxyethyl)-1,4-diazabicyclo-[2.2.2]-octanhydroxid (Monoaddukt von Äthylenoxid und Wasser an 1,4-Diazabicyclo-[2.2.2]-octan), die aus EP-A 37 65 oder EP-A 10 589 bekannten quaternären Hydroxyalkylammoniumhydroxide, wie z.B. N,N,N-Trimethyl-N-(2-hydroxyäthyl)-ammonium-hydroxid, die aus DE-A 2631733, EP-A 0 671 426, EP-A 1 599 526 und US 4,789,705 bekannten Trialkylhydroxylalkylammoniumcarboxylate, wie z.B. N,N,N-Trimethyl-N-2-hydroxypropylammonium-p-tert.-butylbenzoat und N,N,N-Trimethyl-N-2-hydroxypropylammonium-2-ethylhexanoat, die aus der EP-A 1 229 016 bekannten quartären Benzylammoniumcarboxylate, wie z.B. N-Benzyl-N,N-dimethyl-N-ethylammoniumpivalat, N-Benzyl-N,N-dimethyl-N-ethylammonium-2-ethylhexanoat, N-Benzyl-N,N,N-tributylammonium-2-ethylhexanoat, N,N-Dimethyl-N-ethyl-N-(4-methoxybenzyl)ammonium-2-ethylhexanoat oder N,N,N-Tributyl-N-(4-methoxybenzyl)ammoniumpivalat, die aus der WO 2005/087828 bekannten tetrasubstituierten Ammonium-α-hydroxycarboxylate, wie z.B. Tetramethylammonium-lactat, die aus der EP-A 0 339 396, EP-A 0 379 914 und EP-A 0 443 167 bekannten quartären Ammonium- oder Phosphoniumfluoride, wie z.B. N-Methyl-N,N,N-trialkylammoniumfluoride mit C₈-C₁₀-Alkylresten, N,N,N,N-Tetra-n-butylammoniumfluorid, N,N,N-Trimethyl-N-benzylammoniumfluorid, Tetramethylphosphoniumfluorid, Tetraethylphosphoniumfluorid oder Tetra-n-butylphosphoniumfluorid, die aus der EP-A 0 798 299, EP-A 0 896 009 und EP-A 0 962 455 bekannten quaternären Ammonium- und Phosphoniumpolyfluoride, wie z.B. Benzyltrimethylammoniumhydrogenpolyfluorid, die aus der EP-A 0 668 271 bekannten Tetraalkylammoniumalkylcarbonate, die durch Umsetzung tertiärer Amine mit Dialkylcarbonaten erhältlich sind, oder betainstrukturierte Quartär-Ammonioalkylcarbonate, die aus der WO 1999/023128 bekannten quaternären Ammoniumhydrogencarbonate, wie z.B. Cholin-bicarbonat, die aus der EP 0 102 482 bekannten, aus tertiären Aminen und alkylierend wirkenden Estern von Säuren des Phosphors erhältlichen quartären Ammoniumsalze, wie z.B. Umsetzungsprodukte von Triethylamin, DABCO oder N-Methylmorpholin mit Methanphosphonsäuredimethylester, oder die aus WO 2013/167404 bekannten tetrasubstituierten Ammoniumsalze von Lactamen, wie z.B. Trioctylammoniumcaprolactamat oder Dodecyltrimethylammoniumcaprolactamat.

Weitere für das erfindungsgemäße Verfahren geeignete Trimerisierungskatalysatoren C) finden sich beispielsweise in J. H. Saunders und K. C. Frisch, Polyurethanes Chemistry and Technology, S. 94 ff (1962) und der dort zitierten Literatur.

Die Katalysatoren C) können sowohl einzeln als auch in Form beliebiger Gemische untereinander im erfindungsgemäßen Verfahren eingesetzt werden.

Bevorzugte Katalysatoren C) sind Metallverbindungen der vorstehend genannten Art, insbesondere Carboxylate und Alkoholate von Alkalimetallen, Erdalkalimetallen oder Zirkonium sowie organische Zinnverbindungen der genannten Art.

Besonders bevorzugte Trimerisierungskatalysatoren C) sind Natrium- und Kaliumsalze aliphatischer Carbonsäuren mit 2 bis 20 C-Atomen sowie aliphatisch substituierte Zinnverbindungen.

Ganz besonders bevorzugte Trimerisierungskatalysatoren C) für das erfindungsgemäße Verfahren sind Kaliumacetat, Zinndioktoat und/oder Tributylzinnoxid.

Gemäß einer Ausführungsform der Erfindung findet die katalytische Trimerisierung in Gegenwart eines Trimerisierungskatalysators C) statt, wobei der Trimerisierungskatalysator C) vorzugsweise mindestens ein Alkalimetall- oder Erdalkalimetallsalz umfasst.

Gemäß einer bevorzugten Ausführungsform der Erfindung umfasst der Trimerisierungskatalysator C) als Alkalimetallsalz Kaliumacetat und/oder einen Polyether, insbesondere ein Polyethylenglykol.

Beim erfindungsgemäßen Verfahren kommt der Trimerisierungskatalysator C) im Allgemeinen in einer auf die Menge der eingesetzten Zusammensetzung A) bezogenen Konzentration von 0,0005 bis 5,0 Gew.-%, bevorzugt von 0,0010 bis 2,0 Gew.-% und besonders bevorzugt von 0,0015 bis 1,0 Gew.-% zum Einsatz.

Die beim erfindungsgemäßen Verfahren zum Einsatz gelangenden Trimerisierungskatalysatoren C) sind in den Mengen, die zur Initiierung der Oligomerisierungsreaktion benötigt werden, in der Regel ausreichend in der Zusammensetzung A) löslich. Die Zugabe des Katalysators C) zur Zusammensetzung A) erfolgt daher vorzugsweise in Substanz.

Gegebenenfalls können die Katalysatoren C) zur Verbesserung ihrer Einarbeitbarkeit jedoch auch in einem geeigneten organischen Lösungsmittel gelöst eingesetzt werden. Der Verdünnungsgrad der Katalysatorlösungen kann dabei innerhalb eines sehr breiten Bereichs frei gewählt werden. Katalytisch wirksam sind solche Katalysatorlösungen üblicherweise ab einer Konzentration von etwa 0,01 Gew.-% bezogen auf das Gesamtgewicht an Katalysator C) und organischem Lösungsmittel.

Geeignete Katalysatorlösungsmittel sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie ß-Propioiacton, γ-Butyrolacton, ε-Caprolacton und ε-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Sofern beim erfindungsgemäßen Verfahren Katalysatorlösungsmittel zum Einsatz kommen, werden bevorzugt Katalysatorlösungsmittel, die gegenüber Isocyanaten reaktive Gruppen tragen und in den Polyisocyanuratkunststoff eingebaut werden können, verwendet. Beispiele für solche Lösungsmittel sind ein- oder mehrwertige einfache Alkohole, wie z.B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z.B. 1-Methoxy-2-propanol, 3-Ethyl-3-hydroxymethyloxetan, Tetrahydrofurfurylalkohol, Ethylenglykol-monomethylether, Ethylenglykolmonoethylether, Ethylenglykolmonobutylether, Diethylen-glykolmonomethylether, Diethylenglykolmonoethylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z.B. Ethylenglykolmonoacetat, Propylenglykolmonolaurat, Glycerinmono- und diacetat, Glycerinmonobutyrat oder 2,2,4-Trimethyl-1,3-pentandiol-monoisobutyrat; ungesättigte Alkohole wie z.B. Allylalkohol, 1,1-Dimethylallylalkohol oder Oleinalkohol; araliphatische Alkohole wie z.B. Benzylalkohol; N-monosubstituierte Amide, wie z.B. N-Methylformamid, N-Methylacetamid, Cyanacetamid oder 2-Pyrrolidinon oder beliebige Gemische derartiger Lösungsmittel.

Die nach dem erfindungsgemäßen Verfahren erhältlichen Polyisocyanuratkunststoffe zeichnen sich bereits als solche, d. h. ohne Zusatz entsprechender Hilfs-und Zusatzmittel D), durch eine sehr gute Lichtbeständigkeit aus. Dennoch können bei ihrer Herstellung gegebenenfalls übliche Hilfs- und Zusatzmittel D), wie beispielsweise übliche Füllstoffe, UV-Stabilisatoren, Antioxidantien, Formtrennmittel, Wasserfänger, Slipadditive, Entschäumer, Verlaufsmittel, Rheologieadditive, Flammschutzmittel und/oder Pigmente, mitverwendet werden. Diese Hilfs- und Zusatzmittel D), ausgenommen Füllstoffe und Flammschutzmittel, liegen üblicherweise in einer Menge von weniger als 10 Gew.-%, vorzugsweise weniger als 5 Gew.-%, besonders bevorzugt bis zu 3 Gew.-%, bezogen auf die Zusammensetzung A), im Polyisocyanuratkunststoff vor. Flammschutzmittel liegen üblicherweise in Mengen von höchstens 70 Gew.-%, vorzugsweise höchstens 50 Gew.-%, besonders bevorzugt höchstens 30 Gew.-%, berechnet als Gesamtmenge an eingesetzten Flammschutzmitteln bezogen auf das Gesamtgewicht der Zusammensetzung A), im Polyisocyanuratkunststoff vor.

Geeignete Füllstoffe D_{w}) sind beispielsweise AlOH₃, CaCO₃, Metallpigmente wie TiO₂ und weitere bekannte übliche Füllstoffe. Diese Füllstoffe D_{w}) werden vorzugsweise in Mengen von höchstens 70 Gew.-%, bevorzugt höchstens 50 Gew.-%, besonders bevorzugt höchstens 30 Gew.-%, berechnet als Gesamtmenge an eingesetzten Füllstoffen bezogen auf das Gesamtgewicht der Zusammensetzung A), eingesetzt.

Geeignete UV-Stabilisatoren Dₓ) können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1 -methyl-1-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxybenzylidenmalonsäuredimethylester, 4-Methoxybenzylidenmalonsäurediethylester, 4-Butoxy-benzylidenmalonsäuredimethylester. Diese bevorzugten Lichtstabilisatoren können sowohl einzeln als auch in beliebigen Kombinationen untereinander zum Einsatz kommen.

Besonders bevorzugte UV-Stabilisatoren Dₓ) für die erfindungsgemäß herstellbaren Polyisocyanuratkunststoffe sind solche, die Strahlung einer Wellenlänge < 400 nm vollständig absorbieren. Hierzu zählen beispielsweise die genannten Benztriazolderivate. Ganz besonders bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol und/oder 2-(5-Chlor-2H-benzotriazol-2-yl)-4,6-bis(1,1-dimethylethyl)phenol.

Gegebenenfalls werden ein oder mehrere der beispielhaft genannten UV-Stabilisatoren Dₓ) der Zusammensetzung A) vorzugsweise in Mengen von 0,001 bis 3,0 Gew.-%, besonders bevorzugt 0,01 bis 2 Gew.-%, berechnet als Gesamtmenge an eingesetzten UV-Stabilisatoren bezogen auf das Gesamtgewicht der Zusammensetzung A) zugesetzt.

Geeignete Antioxidantien D_{y}) sind vorzugsweise sterisch gehinderten Phenole, welche vorzugsweise ausgewählt werden können aus der Gruppe, bestehend aus 2,6-Di-tert-butyl-4-methylphenol (lonol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden.

Diese Antioxidantien D_{y}) werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf das Gesamtgewicht der Zusammensetzung A) eingesetzt.

Das erfindungsgemäße Verfahren kann, abgesehen von den geringen Mengen gegebenenfalls mitzuverwendender Katalysatorlösungsmittel, lösungsmittelfrei durchgeführt werden. Insbesondere bei der erfindungsgemäßen Verwendung zur Herstellung von Beschichtungen oder Folien kann die Polyisocyanatkomponente zur Verringerung der Verarbeitungsviskosität gegebenenfalls aber auch mit organischen Lösungsmitteln verdünnt werden. Hierfür geeignete Lösungsmittel sind beispielsweise die bereits vorstehend beschriebenen, gegenüber Isocyanatgruppen inerten Katalysatorlösungsmittel.

Bei der erfindungsgemäßen Verwendung zur Herstellung von Folien, Halbzeugen oder Formteilen können als weitere Hilfs- und Zusatzmittel D) schließlich auch interne Formtrennmittel D_{z}) zugesetzt werden.

Bei diesen handelt es sich vorzugsweise um die als Formtrennmittel bekannten Perfluoralkyl- oder Polysiloxaneinheiten enthaltenden nichtionischen Tenside, quartäre Alkylammoniumsalze, wie z.B. Trimethylethylammoniumchlorid, Trimethylstearylammoniumchlorid, Dimethylethylcetylammoniumchlorid, Triethyldodecylammoniumchlorid, Trioctylmethylammoniumchlorid und Diethylcyclohexyldodecylammoniumchlorid, saure Mono- und Dialkylphosphate mit 2 bis 18 Kohlenstoffatomen im Alkylrest, wie z.B. Ethylphosphat, Diethylphosphat, Isopropylphosphat, Düsopropylphosphat, Butylphosphat, Dibutylphosphat, Octylphosphat, Dioctylphosphat, Isodecylphosphat, Diisodecylphosphat, Dodecylphosphat, Didodecylphosphat, Tridecanolphosphat, Bis(tridecanol)-phosphat, Stearylphosphat, Distearylphosphat und beliebige Gemische solcher Formtrennmittel.

Besonders bevorzugte Formtrennmittel D_{z}) sind die genannten sauren Mono- und Dialkylphosphate, ganz besonders bevorzugt solche mit 8 bis 12 Kohlenstoffatomen im Alkylrest.

Interne Formtrennmittel D_{z}) werden beim erfindungsgemäßen Verfahren gegebenenfalls vorzugsweise in Mengen von 0,01 bis 3,0 Gew.-%, besonders bevorzugt 0,02 bis 2,0 Gew.-%, berechnet als Gesamtmenge an eingesetztem internem Formtrennmittel bezogen auf das Gesamtgewicht der Zusammensetzung A) eingesetzt.

Gemäß einer Ausführungsform des erfindungsgemäßen Verfahrens wird der beschriebenen Zusammensetzung A), gegebenenfalls unter Inertgas, wie z.B. Stickstoff, und gegebenenfalls unter Mitverwendung der vorstehend genannten Lösungsmittel sowie Hilfs-und Zusatzmittel D), ein Trimerisierungskatalysator C) oder ein Gemisch unterschiedlicher Trimerisierungskatalysatoren C) zugesetzt und mit Hilfe eines geeigneten Mischaggregats homogen eingemischt. Die Zugabe von Katalysator C) und dem gegebenenfalls mitzuverwendenden Lösungsmittel sowie Hilfs- und Zusatzmitteln D) kann dabei in beliebiger Reihenfolge nacheinander oder im Gemisch in den oben angegebenen Mengen in der Regel bei einer Temperatur von 0 bis 100°C, vorzugsweise von 15 bis 80°C, besonders bevorzugt von 20 bis 60°C, stattfinden.

Der hier beschriebene erfindungsgemäße modifizierte Polyisocyanuratkunststoff eignet sich zur Herstellung von Beschichtungen, Folien, Halbzeugen und Formteilen. Dabei kann je nach Verwendungszweck die Applikation der Reaktionsmischung nach unterschiedlichen an sich bekannten Methoden erfolgen.

Zur Herstellung von Folien oder Beschichtungen, wie z.B. Lacken, kann eine Reaktionsmischung, umfassend Katalysator C) und Zusammensetzung A), beispielsweise durch Spritzen, Streichen, Tauchen, Fluten oder mit Hilfe von Pinseln, Walzen oder Rakeln in einer oder mehrerer Schichten auf beliebige Substrate, wie z.B. Metall, Holz, Glas, Stein, keramische Materialien, Beton, harte und flexible Kunststoffe, Textilien, Leder und Papier, aufgebracht werden, die vor der Beschichtung gegebenenfalls auch mit üblichen Grundierungen versehen werden können.

Weiterer Gegenstand der Erfindung ist ein Substrat, das mit einer Beschichtung enthaltend den erfindungsgemäßen modifizierten Polyisocyanuratkunststoff beschichtet ist. Das Beschichten des Substrats mit der den erfindungsgemäßen Polyisocyanuratkunststoff enthaltenden Beschichtung kann mit den oben genannten an sich bekannten Methoden erfolgen. Hierbei kann entweder eine Reaktionsmischung, umfassend Katalysator C) und Zusammensetzung A), auf das Substrat aufgebracht werden oder es kann ein getrenntes Aufbringen des Katalysators C) und der Zusammensetzung A) auf das Substrat erfolgen. Die katalytische Trimerisierung der Zusammensetzung A) kann im erstgenannten Fall entweder bereits vor Aufbringen auf das Substrat durch Erwärmen der Reaktionsmischung bei Temperaturen, wie weiter unten definiert, gestartet werden oder durch Erwärmen beispielsweise des Substrats nach Aufbringen der Reaktionsmischung bei Temperaturen, wie weiter unten definiert. Die Reaktionsmischung kann auch auf ein bereits vor dem Aufbringen bei Temperaturen, wie weiter unten definiert, erwärmtes Substrat aufgebracht werden.

Zur Herstellung massiver Körper, wie z.B. Halbzeuge oder Formteile, kann die Mischung aus Katalysator C) und Zusammensetzung A) beispielsweise durch einfaches Vergießen von Hand, oder mit Hilfe geeigneter Maschinen, wie z.B. den in der Polyurethantechnologie üblichen Niederdruck- oder Hochdruckmaschinen in offene oder geschlossene Formen gefüllt werden.

Anschließend kann die Trimerisierungsreaktion durch Erwärmen, z.B. der beschichteten Substrate bzw. befüllten Formen, gestartet werden, wobei die optimale Reaktionstemperatur in Abhängigkeit vom jeweils gewählten Trimerisierungskatalysator C) von 45 bis 200°C, besonders bevorzugt von 60 bis 150°C, ganz besonders bevorzugt von 80 bis 140°C beträgt. Die Reaktionstemperatur kann während des gesamten Aushärteprozesses zum Polyisocyanurat im genannten Bereich konstant gehalten werden oder aber beispielsweise über mehrere Stunden linear oder stufenweise bis auf eine Temperatur größer 80°C, vorzugsweise größer 100°C, beispielsweise bis auf 130°C aufgeheizt werden. Wenn hier von "Reaktionstemperatur" die Rede ist, so ist damit die Umgebungstemperatur gemeint.

Abhängig vom gewählten Katalysator C) und der gewählten Reaktionstemperatur ist die Trimerisierungsreaktion nach einem Zeitraum von kleiner einer Minute bis zu mehreren Stunden oder erst nach einigen Tagen weitestgehend abgeschlossen, wie unten definiert. Bevorzugt werden Katalysator, Katalysatormenge und Reaktionstemperatur so gewählt, dass die Reaktion in weniger als 24 Stunden, besonders bevorzugt innerhalb von 12 Stunden, ganz besonders bevorzugt in weniger als 8 Stunden abgeschlossen ist. Der Verlauf der Reaktion kann anfangs noch durch titrimetrische Bestimmung des NCO-Gehaltes verfolgt werden, bei fortschreitender Umsetzung setzt aber rasch eine Gelierung und Verfestigung des Reaktionsgemisches ein, was nasschemische Analyseverfahren unmöglich macht. Der weitere Umsatz der Isocyanatgruppen kann dann nur noch durch spektroskopische Methoden, beispielsweise durch IR-Spektroskopie anhand der Intensität der Isocyanatbande bei ca. 2270 cm⁻¹, verfolgt werden.

Bei den erfindungsgemäßen modifizierten Polyisocyanuratkunststoffen handelt es sich vorzugsweise um hochumgesetzte modifizierte Polyisocyanurate, d.h. solche bei denen die Trimerisierungsreaktion zu Polyisocyanuratstrukturen weitestgehend abgeschlossen ist. Als "weitestgehend abgeschlossen" kann im Sinne der vorliegenden Erfindung eine Trimerisierungsreaktion zu Polyisocyanuratstrukturen angesehen werden, wenn mindestens 80 %, vorzugsweise mindestens 90 %, besonders bevorzugt mindestens 95 % der ursprünglich in der Zusammensetzung A) vorhandenen freien Isocyanatgruppen abreagiert haben. Anders ausgedrückt sind in dem erfindungsgemäßen modifizierten Polyisocyanuratkunststoff vorzugsweise nur noch höchstens 20 %, höchstens 10 %, besonders bevorzugt höchstens 5 % der ursprünglich in der Zusammensetzung A) enthaltenen Isocyanatgruppen vorhanden. Dies kann dadurch erreicht werden, dass im erfindungsgemäßen Verfahren die katalytische Trimerisierung mindestens bis zu einem Umsetzungsgrad fortgesetzt wird, bei dem nur noch z.B. höchstens 20 % der ursprünglich in der Zusammensetzung A) enthaltenen Isocyanatgruppen vorhanden sind, so dass ein hochumgesetzter Polyisocyanuratkunststoff erhalten wird. Der Prozentsatz an noch vorhandenen Isocyanat-Gruppen kann durch einen Vergleich des Gehalts an Isocyanat-Gruppen in Gew.-% in der ursprünglichen Zusammensetzung A) mit dem Gehalt an Isocyanat-Gruppen in Gew.-% im Reaktionsprodukt, beispielsweise durch vorgenannten Vergleich der Intensität der Isocyanatbande bei ca. 2270 cm⁻¹ mittels IR-Spektroskopie, bestimmt werden.

Das erfindungsgemäße Verfahren liefert transparente, blasenfreie modifizierte Polyisocyanuratkunststoffe, die je nach Art des eingesetzten oligomeren, modifizierten Polyisocyanats B) neben Isocyanuratstrukturen und funktionellen Gruppen des Funktionalisierungsreagenzes B2) gegebenenfalls weitere oligomere Strukturen, wie Urethan-, Uretdion-, Allophanat-, Biuret-, Iminooxadiazindion- und/oder Oxadiazintrionstrukturen, enthalten.

Das erfindungsgemäße Verfahren ermöglicht es auf einfache Weise, durch geeignete Auswahl von oligomeren, modifizierten Polyisocyanaten B) hochumgesetzte modifizierte Polyisocyanuratkunststoffe unterschiedlicher Eigenschaften, beispielsweise unterschiedlicher Hydrophilierungsgrade, mechanischer Eigenschaften oder Glasübergangstemperaturen, zu synthetisieren.

Die Erfindung zeichnet sich durch ein vorteilhaftes Baukastenprinzip aus, bei dem unter Beibehaltung des oligomeren Polyisocyanat B1) und der Reaktionsbedingungen der katalytischen Trimerisierung durch Auswahl verschiedenster gegenüber Isocyanatgruppen reaktiven Funktionalisierungsreagenzien B2) eine sehr große Bandbreite an modifizierten Polyisocyanuratkunststoffen erhalten werden können. Praktische Versuche haben gezeigt, dass die Eigenschaften des modifizierten Polyisocyanuratkunststoffs dabei maßgeblich von den durch das Funktionalisierungsreagenz B2) beigesteuerten funktionellen Gruppen abhängen, mit denen der erfindungsgemäß erhältliche Polyisocyanuratkunststoff dann modifiziert ist. So lassen sich durch geeignete Auswahl dieser hydrophilen Modifizierung auf einfache Weise Polyisocyanuratkunststoffe mit unterschiedlichen Eigenschaften erzielen. Durch die hydrophile Modifizierung kann beispielsweise die Haftung der Polyisocyanuratkunststoffe auf verschiedenen Substraten oder die Haftung von verschiedenen Materialien auf den Polyisocyanuratkunststoffen beeinflusst werden. Ferner kann durch die hydrophile Modifizierung die Aufnahme oder Verteilung von polaren Substanzen, beispielsweise Wasser, auf oder im Polyisocyanuratkunststoff beeinflusst werden. Eine Anwendung hierfür sind z.B. anti Beschlagbeschichtungen im Bereich von Brillen oder optischen Linsen.

Die erfindungsgemäßen modifizierten Polyisocyanuratkunststoffe zeichnen sich unabhängig von der gewählten Modifikation ferner durch eine auf der Polyisocyanuratstruktur beruhenden, ungewöhnlich hohe Vernetzungsdichte aus, weshalb sie sich insbesondere zur Fertigung von Beschichtungen mit hoher chemischer Beständigkeit eignen. Die vergleichsweise geringe freiwerdende Reaktionswärme gestattet dabei auch die problemlose Herstellung massiver großvolumiger Formteile.

Diese Kombination aus (1.) neuartigem Polyisocyanuratkunststoff und (2.) der Möglichkeit diesen in vielfacher Weise durch Einsatz bereits modifizierter Ausgangs-Polyisocyanate B) zu modifizieren stellt einen wesentlichen Vorteil der Erfindung gegenüber dem Stand der Technik dar.

Die Erfindung wird im Folgenden an Hand von Beispielen näher erläutert.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909.

Die Rest-Monomeren Gehalte wurden nach DIN EN ISO 10283 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219.

Die Dichten der Ausgangspolyisocyanate wurden nach DIN EN ISO 2811 bestimmt, die der ausgehärteten Polyisocyanuratkunststoffe nach DIN EN ISO 1183-1.

Die Gehalte (mol-%) der in den Ausgangspolyisocyanaten vorliegenden Uretdion-, Isocyanurat-, Allophanat-, Biuret-, Iminooxadiazindion- und/oder Oxadiazintrionstrukturen wurden aus den Integralen protonenentkoppelter ¹³C-NMR-Spektren (aufgenommen an einem Gerät Bruker DPX-400) errechnet und beziehen sich jeweils auf die Summe an vorliegenden Uretdion-, Isocyanurat-, Allophanat-, Biuret-, Iminooxadiazindion- und/oder Oxadiazintrionstrukturen. Im Falle von HDI-Polyisocyanaten weisen die einzelnen Strukturelemente folgende chemische Verschiebungen (in ppm) auf: Uretdion: 157.1; Isocyanurat: 148.4; Allophanat: 155.7 und 153.8, Biuret: 155,5; Iminooxadiazindion: 147.8, 144.3 und 135.3; Oxadiazintrion: 147,8 und 143,9.

Die Glasübergangstemperatur Tg wurde mittels DSC (Differential Scanning Calorimetrie) mit einem Mettler DSC 12E (Mettler Toledo GmbH, Gießen, DE) entsprechend DIN EN 61006 bestimmt. Eine Kalibrierung erfolgte durch die Temperatur des Schmelz-Onsets von Indium und Blei. Es wurden 10 mg Substanz in Normalkapseln eingewogen. Die Messung erfolgte durch drei Aufheizungen von -50°C bis +200°C bei einer Heizrate von 20 K/min mit anschließender Abkühlung mit einer Kühlrate von 320 K/min. Die Kühlung erfolgte durch flüssigen Stickstoff. Als Spülgas wurde Stickstoff verwendet. Die in der untenstehenden Tabelle angegebenen Werte basieren jeweils auf der Auswertung der 3. Aufheizkurve. Als Glasübergangstemperatur Tg wurde die Temperatur bei der halben Höhe einer Glasübergangsstufe bestimmt.

Shore-Härten wurden nach DIN 53505 mit Hilfe eines Shore-Härteprüfgerätes Zwick 3100 (Fa. Zwick, DE) gemessen.

IR-Spektren wurden an einem mit einer ATR-Einheit ausgerüstetem FT-IR-Spektrometer Spectrum Two der Fa. Perkin Elmer, Inc. aufgenommen.

Die Wasseraufnahme der Probenkörper wurde gravimetrisch nach 7-tägiger Lagerung in Wasser bei 23°C bestimmt.

Kontaktwinkel, Oberflächenspannung und Oberflächenenergie wurden mit einem Kontaktwinkelmessgerät OCA 20 von Dataphysics GmbH bei 23°C bestimmt.

### Ausgangsverbindungen

### Oligomeres Ausgangspolyisocyanat B1)-1

Für den Einsatz als Polyisocyanatzusammensetzung A) wurde als Ausgangspolyisocyanat A1) ein Isocyanuratgruppen enthaltendes HDI-Polyisocyanat, hergestellt in Anlehnung an Beispiel 11 der EP-A 330 966 hergestellt. Die Reaktion wurde bei einem NCO-Gehalt der Rohmischung von 40 % durch Zugabe von Dibutylphosphat gestoppt. Anschließend wurde nicht umgesetztes HDI durch Dünnschichtdestillation bei einer Temperatur von 130°C und einem Druck von 0,2 mbar abgetrennt.

| | |
|---|---|
| NCO-Gehalt: | 21,8 % |
| NCO-Funktionalität: | 3,4 |
| Monomeres HDI: | 0,1 % |
| Viskosität (23°C): | 3000 mPas |
| Dichte (20°C): | 1,17 g/cm³ |

Verteilung der oligomeren Strukturtypen:

| | |
|---|---|
| Isocyanurat: | 84,5 mol-% |
| Iminooxadiazindion | 5,4 mol-% |
| Uretdion | 2,9 mol-% |
| Allophanat: | 7,2 mol-% |

### Oligomeres, modifiziertes Polyisocyanat B)-1

870 g (4,51 val) des oligomeren Ausgangspolyisocyanats B1)-1 wurden bei Raumtemperatur unter Rühren mit 130 g (0,37 val) eines auf Methanol gestarteten, monofunktionellen Polyethylenoxidpolyethers mit einem mittleren Molekulargewicht von 350 versetzt und anschließend für 3 h auf 100°C erwärmt. Nach Abkühlen auf Raumtemperatur lag ein oligomeres, modifiziertes Polyisocyanat vor. Das Produkt wies folgende Kenndaten auf:

| | |
|---|---|
| NCO-Gehalt: | 17,4 % |
| NCO-Funktionalität: | 3,2 |
| Monomeres HDI: | 0,1 % |
| Viskosität (23°C): | 3.050 mPas |

### Oligomeres, modifiziertes Polyisocyanat B)-2

900 g (4,67 val) des oligomeren Ausgangspolyisocyanats B1)-1 wurden bei 100°C unter trockenem Stickstoff und Rühren vorgelegt, innerhalb von 30 min mit 100 g (0,20 val) eines auf Methanol gestarteten, monofunktionellen Polyethylenoxidpolyethers eines mittleren Molekulargewichtes von 500 versetzt und anschließend bei dieser Temperatur weitergerührt, bis der NCO-Gehalt der Mischung nach etwa 2 h auf den einer vollständigen Urethanisierung entsprechenden Wert von 18,8 % gefallen war. Nach Zugabe von 0,01 g Zink-(II)-2-ethyl-1-hexanoat als Allophanatisierungskatalysator stieg die Temperatur des Reaktionsgemisches aufgrund der freiwerdenden Reaktionswärme bis auf 106°C an. Nach Abklingen der Exothermie, etwa 30 min nach Katalysatorzugabe, wurde die Reaktion durch Zugabe von 0,01 g Benzoylchlorid abgebrochen und das Reaktionsgemisch auf Raumtemperatur abgekühlt. Es lag ein erfindungsgemäßes, praktisch farbloses klares Polyisocyanatgemisch mit folgenden Kenndaten vor:

| | |
|---|---|
| NCO-Gehalt: | 18,0% |
| NCO-Funktionalität: | 3,8 |
| Monomeres HDI: | 0,1 % |
| Viskosität (23°C): | 4.000 mPas |

### Oligomeres, modifiziertes Polyisocyanat B)-3

850 g (4,41 val) des oligomeren Ausgangspolyisocyanats B1)-1 wurden bei 100°C unter trockenem Stickstoff und Rühren vorgelegt, innerhalb von 30 min mit 150 g (0,30 val) eines auf Methanol gestarteten, monofunktionellen Polyethylenoxidpolyethers eines mittleren Molekulargewichtes von 500 versetzt und anschließend bei dieser Temperatur weitergerührt, bis der NCO-Gehalt der Mischung nach etwa 2 h auf den einer vollständigen Urethanisierung entsprechenden Wert von 17,3 % gefallen war. Nach Zugabe von 0,01 g Zink-(II)-2-ethyl-1-hexanoat als Allophanatisierungskatalysator stieg die Temperatur des Reaktionsgemisches aufgrund der freiwerdenden Reaktionswärme bis auf 108°C an. Nach Abklingen der Exothermie, etwa 30 min nach Katalysatorzugabe, wurde die Reaktion durch Zugabe von 0,01 g Benzoylchlorid abgebrochen und das Reaktionsgemisch auf Raumtemperatur abgekühlt. Es lag ein erfindungsgemäßes, praktisch farbloses klares Polyisocyanatgemisch mit folgenden Kenndaten vor:

| | |
|---|---|
| NCO-Gehalt: | 16,0% |
| NCO-Funktionalität: | 4,0 |
| Monomeres HDI: | 0,1 % |
| Viskosität (23°C): | 6.500 mPas |

### Katalysatormischung C)-1

Zur Herstellung des Katalysators wurden 159,058 g Diethylenglykol mit 24,588 g [18]-Krone-6 und 7,557 g Kaliumacetat vermischt und so lange bei Raumtemperatur gerührt, bis eine homogene Lösung entstanden war.

Alle Rohstoffe wurden von Sigma-Aldrich bezogen.

### Herstellung der erfindungsgemäßen Beispiele:

120 g des Ausgangspolyisocyanates wurden gemeinsam mit 3,7 g der Katalysatormischung C)-1 in einen Polypropylenbecher eingewogen und mit Hilfe eines Speed-Mixers DAC 150 FVZ (Firma Hauschild, DE) 1 Minute bei 3500 U/min homogenisiert. Von der erhaltenen Mischung wurden 12 g in ein Aluminiumschälchen mit einem Durchmesser von 9,7 cm gegossen und anschließend innerhalb von 15 Minuten bei 180°C im Ofen ausgehärtet.

Es wurden transparente modifizierte Polyisocyanuratkunststoffe mit folgenden Kenndaten erhalten:

| **Ausgangspolyisocyanat** | **B)-1** | **B)-2** | **B)-3** |
|---|---|---|---|
| **Aussehen** | klar | klar | klar |
| **Glasübergangstemperatur** | 55,5°C | 68,0°C | 52,5°C |
| **Shore D Härte** | 75 | 76 | 74 |

IR-spektroskopisch waren bei allen Versuchen im Reaktionsprodukt keine Isocyanatgruppen (Bande bei 2270 cm⁻¹) nachzuweisen.

### Bestimmung der Wasseraufnahme:

Probekörper der erfindungsgemäßen Beispiele B)-1 bis B)-3 und ein auf gleiche Weise hergestellter Probenkörper des Ausgangspolyisocyanats B1)-1 wurde jeweils für 7 Tage bei 23°C in einem Gefäß mit entionisiertem Wasser gelagert. Nach Ablauf der Lagerdauer wurden die Probenkörper aus dem Gefäß entnommen, mit einem Papiertuch trocken getupft und anschließen gewogen. Die Wasseraufnahme wurde durch Differenzbildung der Gewichte nach gegenüber vor der Wasserlagerung errechnet.

| **Ausgangspolyisocyanat** | **B1)-1** | **B)-1** | **B)-2** | **B)-3** |
|---|---|---|---|---|
| **Wasseraufnahme [g]** | 0,056 | 0,167 | 0,108 | 0,240 |

Die Oberflächenenergie und der Kontaktwinkel mit Wasser als Prüfmedium wurden auf der Unterseite der Probenkörper gemessen.

| **Ausgangspolyisocyanat** | **B1)-1** | **B)-1** | **B)-2** | **B)-3** |
|---|---|---|---|---|
| **Kontaktwinkel [Wasser]** | 0,056 | 0,167 | 0,108 | 0,240 |
| **Oberflächenenergie [mN/m]** | 45,6 | 50.8 | 49,3 | 51,5 |
| **polarer Anteil [mN/m]** | 13,2 | 20,5 | 18,4 | 17,4 |

Sowohl die Bestimmung der Wasseraufnahme als auch die Messung der Oberflächenenergie bzw. des Kontaktwinkels zeigen den hydrophilen und stark polaren Charakter der erfindungsgemäßen Probenkörper. Sie unterscheiden sich damit deutlich vom unmodifizierten Ausgangspolyisocyanat.

## Patentansprüche

1. Modifizierter Polyisocyanuratkunststoff, erhältlich durch ein Verfahren umfassend die folgenden Schritte:
a1) Bereitstellen einer Zusammensetzung A) enthaltend oligomere, modifizierte Polyisocyanate B) und höchstens 20 Gew.-% an monomeren Diisocyanaten, bezogen auf das Gewicht der Zusammensetzung A), wobei die oligomeren, modifizierten Polyisocyanate B) ein Reaktionsprodukt aus einem oligomeren Polyisocyanat B1) und mindestens einem gegenüber Isocyanatgruppen reaktiven Funktionalisierungsreagenz B2) darstellen, und wobei das mindestens eine gegenüber Isocyanatgruppen reaktive Funktionalisierungsreagenz B2) mindestens eine gegenüber Isocyanatgruppen reaktive funktionelle Gruppe aufweist, die keine Isocyanatgruppe ist;
a2) katalytische Trimerisierung der Zusammensetzung A).

2. Modifizierter Polyisocyanuratkunststoff gemäß Anspruch 1, **dadurch gekennzeichnet, dass** das mindestens eine gegenüber Isocyanatgruppen reaktive Funktionalisierungsreagenz B2) eine Oberflächenspannung von > 20 mN/m und < 70 mN/m aufweist.

3. Modifizierter Polyisocyanuratkunststoff gemäß Anspruch 1, **dadurch gekennzeichnet, dass** das mindestens eine gegenüber Isocyanatgruppen reaktive Funktionalisierungsreagenz B2) so gewählt ist, dass es nach Reaktion mit Polyisocyanat B1) die Oberflächenspannung von B) um mindestens 2 mN/m erhöht.

4. Modifizierter Polyisocyanuratkunststoff gemäß Anspruch 1, **dadurch gekennzeichnet, dass** das mindestens eine gegenüber Isocyanatgruppen reaktive Funktionalisierungsreagenz B2) so gewählt ist, dass es nach Reaktion mit dem Polyisocyanat B1) und katalytischer Trimerisierung der Zusammensetzung A) die Oberflächenenergie des Polyisocyanuratkunststoffes um mindestens 2 mN/m erhöht.

5. Modifizierter Polyisocyanuratkunststoff gemäß Anspruch 1, **dadurch gekennzeichnet, dass** das mindestens eine gegenüber Isocyanatgruppen reaktive Funktionalisierungsreagenz B2) nach Reaktion mit Polyisocyanat B1) die Viskosität von A) um mindestens 50 mPas erhöht.

6. Modifizierter Polyisocyanuratkunststoff gemäß einem der Ansprüche 1 bis 5, **dadurch gekennzeichnet, dass** das mindestens eine gegenüber Isocyanatgruppen reaktive Funktionalisierungsreagenz B2) ein Polyetheralkohol ist.

7. Modifizierter Polyisocyanuratkunststoff gemäß Anspruch 6, **dadurch gekennzeichnet, dass** der Polyetheralkohol ein Polyalkylenoxidpolyetheralkohol ist, der im statistischen Mittel 5 bis 50, vorzugsweise 5 bis 25 Alkylenoxideinheiten aufweist.

8. Modifizierter Polyisocyanuratkunststoff gemäß Anspruch 7 **dadurch gekennzeichnet, dass** die Alkylenoxideinheiten des Polyalkylenoxidpolyetheralkohols zu mindestens 70 mol.-%, vorzugsweise mindestens 80 mol.-%, aus Ethylenoxideinheiten bestehen.

9. Modifizierter Polyisocyanuratkunststoff gemäß einem der Ansprüche 7 oder 8, **dadurch gekennzeichnet, dass** der Polyalkylenoxidpolyetheralkohol ein Polyethylenglycolmonomethyletheralkohol ist.

10. Modifizierter Polyisocyanuratkunststoff gemäß einem der Ansprüche 1 bis 9, **dadurch gekennzeichnet, dass** das oligomere Polyisocyanat B1) auf Basis von 1,5-Diisocyanatopentan (PDI), 1,6-Diisocyanatohexan (HDI), Isophorondiisocyanat (IPDI) 1,3- Bis(isocyanatomethyl)cyclohexan, 1,4-Bis(isocyanatomethyl)cyclohexan, 2,4'-Diisocyanatodicyclohexylmethan oder 4,4'-Diisocyanatodicyclohexylmethan (H12MDI) oder deren Mischungen aufgebaut ist.

11. Modifizierter Polyisocyanuratkunststoff gemäß einem der Ansprüche 1 bis 10, **dadurch gekennzeichnet, dass** die katalytische Trimerisierung in Gegenwart eines Trimerisierungskatalysators C) stattfindet, wobei der Trimerisierungskatalysator C) vorzugsweise mindestens ein Alkalimetall- oder Erdalkalimetallsalz umfasst.

12. Modifizierter Polyisocyanuratkunststoff gemäß einem der Ansprüche 1 bis 11, **dadurch gekennzeichnet, dass** dieser einen hochumgesetzten modifizierten Polyisocyanuratkunststoff darstellt, in dem höchstens 20 % der ursprünglich in der Zusammensetzung A) enthaltenen Isocyanatgruppen erhalten geblieben sind.

13. Verwendung eines modifizierten Polyisocyanuratkunststoffs gemäß einem der Ansprüche 1 bis 12 zur Herstellung von Beschichtungen, Folien, Halbzeugen und Formteilen.

14. Beschichtungen, Folien, Halbzeuge und Formteile, Verbundmaterialien enthaltend einen modifizierten Polyisocyanuratkunststoff gemäß einem der Ansprüche 1 bis 12.

15. Verfahren zur Herstellung eines modifizierten Polyisocyanuratkunststoffs, umfassend die folgenden Schritte:
a1) Bereitstellen einer Zusammensetzung A) enthaltend oligomere, modifizierte Polyisocyanate B) und höchstens 20 Gew.-% an monomeren Diisocyanaten, bezogen auf das Gewicht der Zusammensetzung A), wobei die oligomeren, modifizierten Polyisocyanate B) ein Reaktionsprodukt aus einem oligomeren Polyisocyanat B1) und mindestens einem gegenüber Isocyanatgruppen reaktiven Funktionalisierungsreagenz B2) darstellen, und wobei das mindestens eine gegenüber Isocyanatgruppen reaktive Funktionalisierungsreagenz B2) mindestens eine gegenüber Isocyanatgruppen reaktive funktionelle Gruppe aufweist, die keine Isocyanatgruppe ist;
a2) katalytische Trimerisierung der Zusammensetzung A).

16. Verfahren gemäß Anspruch 15, **dadurch gekennzeichnet, dass** die katalytische Trimerisierung in Gegenwart eines Trimerisierungskatalysators C) stattfindet, der wie in Anspruch 11 definiert ist.

17. Verfahren gemäß Anspruch 15 oder 16, **dadurch gekennzeichnet, dass** das oligomere Polyisocyanate B1) wie in Anspruch 10 definiert ist, das mindestens eine gegenüber Isocyanatgruppen reaktive Funktionalisierungsreagenz B2) wie in einem der Ansprüche 2, 6, 7, 8 oder 9 definiert ist.

18. Verfahren gemäß einem der Ansprüche 15 bis 17, **dadurch gekennzeichnet, dass** die katalytische Trimerisierung mindestens bis zu einem Umsetzungsgrad fortgesetzt wird, bei dem nur noch höchstens 20 % der ursprünglich in der Zusammensetzung A) enthaltenen Isocyanatgruppen vorhanden sind, so dass ein hochumgesetzter modifizierter Polyisocyanuratkunststoff erhalten wird.
